# EUROPEAN PATENT SPECIFICATION

(11) **EP 3 251 775 B1**
(45) Date of publication and mention of the grant of the patent: **11.03.2020**
(21) Application number: 15889241.4
(22) Date of filing: 18.09.2015
(51) Int. Cl.: B22C 9/02, B22C 9/06, B22C 9/08, B22D 17/32, B22D 46/00, B22D 47/02, B22D 23/00, B22D 33/02

(54) **DATA MANAGEMENT SYSTEM**
DATENVERWALTUNGSSYSTEM
SYSTÈME DE GESTION DE DONNÉES

(30) Priority: 17.04.2015 JP 2015085359
(43) Date of publication of application: 06.12.2017
(73) Proprietor: Sintokogio, Ltd., Aichi 450-6424 (JP)
(72) Inventor: FUNAKOSHI, Yukiyoshi, Toyokawa-shi Aichi 442-8505 (JP); KANEDA, Keishiro, Toyokawa-shi Aichi 442-8505 (JP); KATO, Shigeyoshi, Toyokawa-shi Aichi 442-8505 (JP)
(74) Representative: Hoffmann Eitle
(86) International application number: PCT/JP2015/076687
(87) International publication number: WO 2016/166906

(56) References cited:
- JP-A- H10 202 355
- JP-A- S63 183 768
- JP-A- S63 183 768
- JP-A- 2003 205 359
- JP-A- 2003 205 359
- JP-A- 2004 122 148
- JP-A- 2007 054 850
- JP-A- 2007 054 850
- JP-A- 2010 005 649
- JP-A- 2010 005 649
- JP-A- 2015 033 712
- JP-A- 2015 033 712
- US-A- 5 697 424

## Description

### Technical Field

The present invention relates to a data management system.

### Background Art

Patent Literature 1 describes a system in which while a product number is given to a casting formed by a casting apparatus that pours molten metal using pressure, mold conditions, molten metal conditions, and injection conditions are recorded for each individual product number of castings. Patent Literature 2 describes a system in which data on a sand mold, core, and molten metal are recorded for each individual product number of castings in a manufacturing process of a casting apparatus that forms a casting by using a sand mold and core.

### Citation List

### Patent Literature

Patent Literature 1: Japanese Unexamined Patent Publication No. H10-202355
Patent Literature 2: Japanese Unexamined Patent Publication No. 2015-33712

JP2015033712A considers the problem of providing a method for administering manufacturing data of a cast product, that has an impact on quality of the cast product and that is capable of verifying an intermediate product for each cast product in a manufacturing process in which verification is complicated after completing the cast product. In a method for administering manufacturing data of a cast product, various kinds of manufacturing data of the cast product is registered and administered in a database. The method for administering the manufacturing data of the cast product includes: a first data acquisition step for acquiring manufacturing data of a sand-mold in a sand-mold step in which the sand-mold is manufactured; and a second data acquisition step for acquiring manufacturing data of molten metal in a molten metal manufacturing step in which the molten metal is tapped. All the manufacturing data acquired in the first data acquisition step and the second data acquisition step is registered and administered in the database in association with each of the corresponding cast products.

JP2007054850A considers the problem of providing a gravity type tilting die casting apparatus which has a simple structure, and can be easily installed and maintained, and can be manufactured at low cost. In an apparatus, when a flexible member is moved by means of a driving device in one direction, the arm pivotally mounted on the flexible member is turned in one direction, and an upper die plate is lowered via the link pivotally mounted on the arm, and an upper die is fastened to a lower die. After the dies have been fastened, molten metal is supplied to a basin in the upright position. While the flexible member is further moved in one direction, and a turning frame is swivelled in the other direction up to a tilting position against the turning torque for turning the turning frame in one direction about a horizontal rotation axis by the total gravity force to be applied to the turning frame, the molten metal is poured from the basin into the die. When the molten metal has been cooled, the flexible member is moved in the other direction by means of the driving device, and after the turning frame has been swivelled in one direction up to the upright position, the upper die plate is lifted via the arm and the link, and the upper die is separated from the lower die.

JP2003205359A considers the problem of providing a gravity type tilting metallic mold casting apparatus in which molten metal pouring speed for preventing entrapment of air and an oxide film is controlled so that peripheral speed is made slow by minimizing the tilting radius of the center in the upper and the lower metallic molds without extending the tilting process time, the upper part in the lower metallic mold is brought into an open state when the upper metallic mold is opened, and which is miniaturized by minimizing the apparatus tilting radius and shortening the height of the apparatus, and installed in a small space without sacrificing the workability of a core assembling and a casting taking-out works and without requiring a pit. A metallic mold opening/closing mechanism for opening/closing the upper and the lower metallic molds is constituted so as to be tiltable with a horizontal-state main body rotating shaft, of which the center line is passed through almost the center of gravity of the metallic mold opening/closing mechanism, and a tilting means, and a molten metal pouring means for pouring the molten metal into the upper and the lower metallic molds is fitted to a main body frame.

### Summary of Invention

### Technical Problem

Unfortunately, information that can be acquired is limited in conventional systems, and thus it is sometimes difficult to identify a cause of a defective product. For example, since the apparatus described in Patent Literature 1 pours molten metal by using pressure, it is impossible to acquire specific information on a casting apparatus that pours molten metal by using gravity. In the apparatus described in Patent Literature 2, it is impossible to acquire information on a casting apparatus in which a mold is tilted. That is, when a conventional system uses a casting apparatus that pours molten metal by using gravity, and includes a mold that can be tilted, there is room for improvement.

### Solution to Problem

A data management system according to an aspect of the present invention controls data related on a casting on a casting process, and is connected to a casting equipment. The casting equipment includes: a casting apparatus configured to form the casting by using upper and lower molds into which molten metal is poured by using gravity, the upper and lower molds being able to be opened, closed, and tilted; and an engraving apparatus configured to engrave a product identifier on the casting. The data management system includes: a storage device configured to store the data; an acquisition unit configured to acquire the product identifier and a tilting pattern of each of the upper and lower molds in the casting apparatus; and a control unit configured to associate the product identifier with the tilting pattern acquired by the acquisition unit, and to cause the storage device to store the associated product identifier and tilting pattern.

According to the data management system, the product identifier and the tilting pattern of each of the upper and lower molds in the casting apparatus are acquired by the acquisition unit, and the product identifier and the tilting pattern are associated with each other by the control unit, and are then stored in the storage device. Accordingly, when some kind of defect occurs in a product (casting), a tilting pattern during manufacture of the product can be identified on the basis of the product identifier engraved on the product. The tilting pattern of each of the upper and lower molds affects speed of pouring molten metal. While productivity is improved with increase in pouring speed, possibility of occurrence of suction of air and an oxide film increases. Thus, when some kind of defect occurs in a product, it is possible to determine whether a tilting pattern during manufacture of the product is one of causes of the defect by identifying the tilting pattern.

The casting apparatus includes an upper frame to which the upper mold is attached; a lower frame to which the lower mold is attached; a mold closing mechanism that is provided in the upper frame to move up and down the upper mold, or that is provided in the lower frame to move up and down the lower mold; a pair of main link members each of which has upper and lower ends that are rotatably coupled to the upper and lower frames, respectively, to be oppositely arranged, and has a central portion that is provided with a rotating shaft; a pair of auxiliary link members that is arranged parallel to the respective main link members, and each of which has upper and lower ends that are rotatably coupled to the upper and lower frames, respectively, to be oppositely arranged, and has a central portion that is provided with a rotating shaft; and drive means that is provided to be coupled to the rotating shaft of one of the pair of main link members, and that tilts the upper mold and the lower mold or horizontally moves the molds away from each other, the upper frame, the lower frame, the main link member, and the auxiliary link member, constituting a parallel link mechanism.

A data management system according to another aspect of the present invention controls data related on a casting on a casting process, and is connected to a casting equipment. The casting equipment includes: a casting apparatus configured to form the casting by using upper and lower molds into which molten metal is poured by using gravity, the upper and lower molds being able to be opened, closed, and tilted; and an engraving apparatus configured to engrave a product identifier on the casting. The data management system includes: a storage device configured to store the data; an acquisition unit configured to acquire the product identifier and temperature transition of each of the upper and lower molds in the casting apparatus during casting process; and a control unit configured to associate the product identifier with the temperature transition acquired by the acquisition unit, and to cause the storage device to store the associated product identifier and temperature transition.

According to the data management system, the product identifier and the temperature transition of each of the upper and lower molds in the casting apparatus during casting process are acquired by the acquisition unit, and the product identifier and the temperature transition are associated with each other by the control unit, and are then stored in the storage device. Accordingly, when some kind of defect occurs in a product (casting), the temperature transition of the molds during manufacture of the product can be identified on the basis of the product identifier engraved on the product. The temperature transition of each of the upper and lower molds affects coagulation speed of a casting. The coagulation speed has an optimal value depending on a casting material and a mold shape, for example, and affects product quality. Thus, when some kind of defect occurs in a product, it is possible to determine whether temperature transition of each of the upper and lower molds during manufacture of the product is one of causes of the defect by identifying the temperature transition.

A data management system according to yet another aspect of the present invention controls data related on a casting on a casting process, and is connected to a casting equipment. The casting equipment includes: a casting apparatus configured to form the casting by using upper and lower molds into which molten metal is poured by using gravity, the upper and lower molds being able to be opened, closed, and tilted; and an engraving apparatus configured to engrave a product identifier on the casting. The data management system includes: a storage device configured to store the data; an acquisition unit configured to acquire the product identifier and imaging data acquired by taking an image of an inner surface of the upper or lower mold; and a control unit configured to associate the product identifier with the imaging data acquired by the acquisition unit, and to cause the storage device to store the associated product identifier and imaging data.

According to the data management system, the product identifier and the imaging data acquired by taking an image of the inner surface of the upper mold or the lower mold are acquired by the acquisition unit, and the product identifier and the imaging data are associated with each other by the control unit, and are then stored in the storage device. Accordingly, when some kind of defect occurs in a product (casting), imaging data on the inner surface of one of the molds during manufacture of the product can be identified on the basis of the product identifier engraved on the product. In the inner surface of each of the upper and lower molds, a coating, serving for protecting a mold when manufacture is repeated, sometimes peels, and a molten metal component such as an aluminum alloy may adhere to the surface to form a film. Conditions of the film may affect product quality. Thus, when some kind of defect occurs in a product, it is possible to determine whether the inner surface of the upper or lower mold during manufacture of the product is one of causes of the defect by identifying the imaging data on the inner surface.

In an embodiment, the casting equipment may further includes: a holding furnace that holds molten metal to be used in a casting apparatus; a pouring apparatus that transfers the molten metal to the casting apparatus from the holding furnace, and pours the molten metal into the casting apparatus; a core molding apparatus that molds a core to be used in the casting apparatus; a cooler that cools a casting formed by the casting apparatus; a shakeout apparatus that removes core sand inside the casting cooled by the cooler; and a finishing apparatus that applies finishing processing to the casting, and the acquisition unit may further acquire molten metal information on molten metal in the holding furnace, transfer information on transfer of the pouring apparatus, core information on a core molded by the core molding apparatus, cooling information on cooling by the cooler, shakeout information on shakeout by the shakeout apparatus, and finishing information on finishing processing by the finishing apparatus, and the control unit may associate the product identifier with the molten metal information, the transfer information, the core information, the cooling information, the shakeout information, and the finishing information, and may cause the storage device to store the associated information.

In this case, there is acquired the information on not only the casting apparatus but also the information on the holding furnace, the pouring apparatus, the core molding apparatus, the cooler, the shakeout apparatus, and the finishing apparatus, related to manufacture of products, and the information and the product identifier are associated with each other. Thus, when some kind of defect occurs in a product, it is possible to identify a cause of the defect even if the defect is affected by conditions in a plurality of steps because the cause of the defect can be considered by using entire information on a manufacturing process of the product.

In an embodiment, in the casting apparatus of the casting equipment, connected to the data management system, the upper frame to which the upper mold is attached, and the lower frame to which the lower mold is attached, are coupled to each other by a left-and-right pair of the main link member and the auxiliary link member to constitute the parallel link mechanism, and the rotating shaft is provided at the central portion of each of the main link member and the auxiliary link member. Then, the drive means for tilting the upper mold and the lower mold or horizontally moving the molds away from each other is provided to be coupled to the rotating shaft of one of the pair of main link members. In addition, the upper mold or the lower mold is moved up and down by the mold closing mechanism. Accordingly, in a step of mold closing, the upper mold and the lower mold is closed by the mold closing mechanism, and in a step of tilting, the closed upper mold and lower mold are tilted by the drive means and the parallel link mechanism, and also in a step of mold removal or a step of pushing out a product, the upper mold and the lower mold opened by the mold closing mechanism are horizontally moved away from each other by the drive means and the parallel link mechanism. Even if a casting is formed by using the casting apparatus that operates as described above, a cause of a defective product can be identified.

### Advantageous Effects of Invention

A variety of aspects and embodiments of the present invention enables data during manufacture of a casting formed by a casting apparatus provided with a mold into which molten metal is poured by using gravity, the mold being able to be tilted, to be controlled by using a product identifier.

### Brief Description of Drawings

[Figure 1] Figure 1 is a plan view of casting equipment to be an object of a data management system according to an embodiment.
[Figure 2] Figure 2 is a side view of a part of the casting equipment shown in Figure 1.
[Figure 3] Figure 3 is a front view of the casting apparatus shown in Figure 1.
[Figure 4] Figure 4 is a side view of the casting apparatus shown in Figure 3.
[Figure 5] Figure 5 shows a section of the upper mold and the lower mold shown in Figure 3.
[Figure 6] Figure 6 is a functional block diagram of the data management system according to the embodiment.
[Figure 7] Figure 7 is a flowchart of an example of a manufacturing method using the casting equipment of Figure 1.
[Figure 8] Figure 8 is a flowchart illustrating an example of a step of casting using the casting equipment of Figure 1.
[Figure 9] Figure 9 is an illustration viewed from arrows A-A in Figure 3 to describe an initial state.
[Figure 10] Figure 10 shows the second separation state after the upper and lower molds are slid by operation of a parallel link mechanism.
[Figure 11] Figure 11 is an illustration to describe a mold closing state where the upper mold and the lower mold are closed.
[Figure 12] Figure 12 shows the upper mold and the lower mold closed that are turned at 90°.
[Figure 13] Figure 13 shows the upper mold that is lifted up to an intermediate position.
[Figure 14] Figure 14 shows a first separation state after the upper mold and the lower mold are slid.
[Figure 15] Figure 15 shows a state where the upper mold is lifted up to an ascending end from the state of Figure 14.
[Figure 16] Figure 16 illustrates a flow of data in the data management system according to the embodiment.
[Figure 17] Figure 17 is a table in which a product number is associated with information in each step.
[Figure 18] Figure 18 is a table showing information in each step.

### Description of Embodiments

Embodiments of the present invention will be described below with reference to the accompanying drawings. In description of the drawings, the same element is designated by the same reference numeral without duplicated description on the element. In addition, a dimension ratio of the drawings does not always agree with an actual ratio of a described matter. Further, each of terms of "upper", "lower", "left", and "right" is a state based on a state shown in the drawings, and is shown for convenience.

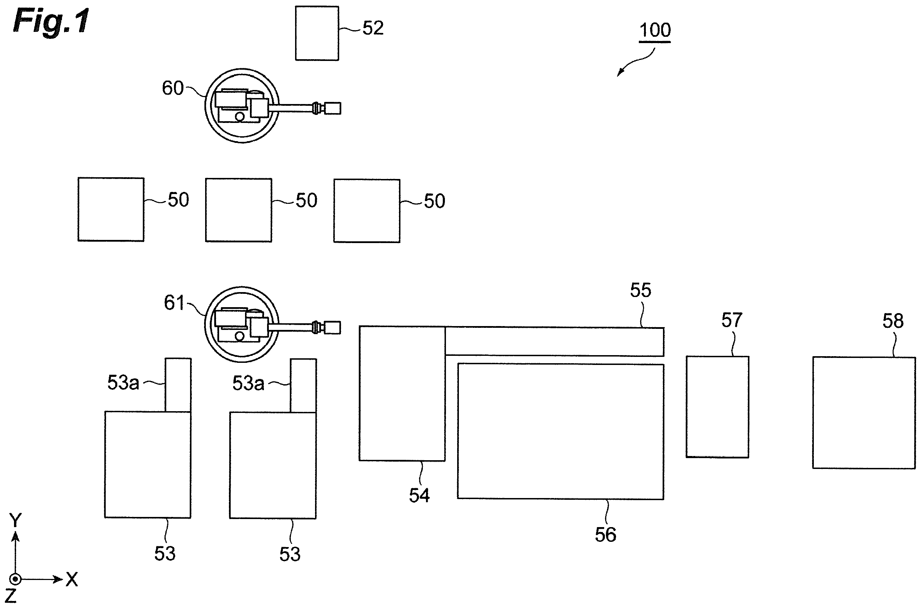

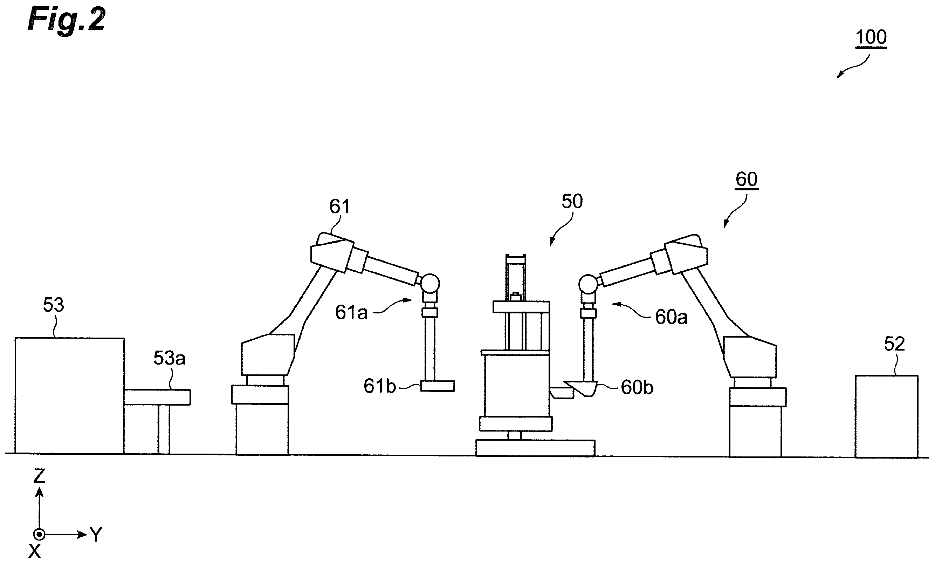

A data management system according to the present embodiment controls manufacture data to identify a cause of a defect occurring in a casting (product), for example. First, with reference to Figures 1 and 2, an example of casting equipment to be an object of the data management system according to the embodiment will be described. Figure 1 is a plan view of the casting equipment to be an object of the data management system according to the embodiment. Figure 2 is a side view of a part of structure of the casting equipment of Figure 1. In Figures 1 and 2, each of an X direction and a Y direction is a horizontal direction, and a Z direction is a vertical direction.

As shown in Figures 1 and 2, casting equipment 100 includes a casting apparatus 50, a holding furnace 52, a pouring apparatus (pouring robot) 60, a transfer apparatus (transfer robot) 61, a core molding apparatus 53, an engraving apparatus 54, a conveyor 55, a cooler 56, a shakeout apparatus 57, and a finishing apparatus 58. The casting equipment 100 may not include the holding furnace 52, the pouring apparatus (pouring robot) 60, the transfer apparatus (transfer robot) 61, the core molding apparatus 53, the conveyor 55, the cooler 56, the shakeout apparatus 57, and the finishing apparatus 58. The casting equipment 100 may include apparatuses (not shown) in upstream or downstream steps.

In the present embodiment, the casting equipment 100 includes three casting apparatuses 50, for example. Each of the casting apparatuses 50 is horizontally (X direction) arranged in a line, for example. The pouring apparatus 60 is arranged at a position between the casting apparatus 50 and the holding furnace 52. The core molding apparatus 53 is arranged on the opposite side of the holding furnace 52 with respect to the casting apparatus 50. The casting equipment 100 includes two core molding apparatuses 53, for example. The transfer apparatus 61 is arranged between the casting apparatus 50 and the core molding apparatus 53. In addition, the engraving apparatus 54 is arranged on a side (X direction) of the core molding apparatus 53 as well as within a movable range of the transfer apparatus 61. The conveyor 55 is juxtaposed with the engraving apparatus 54. The conveyor 55 extends to the cooler 56 arranged on a side of the engraving apparatus 54. The shakeout apparatus 57 is arranged on a side of the cooler 56. The finishing apparatus 58 is arranged on a side of the shakeout apparatus 57.

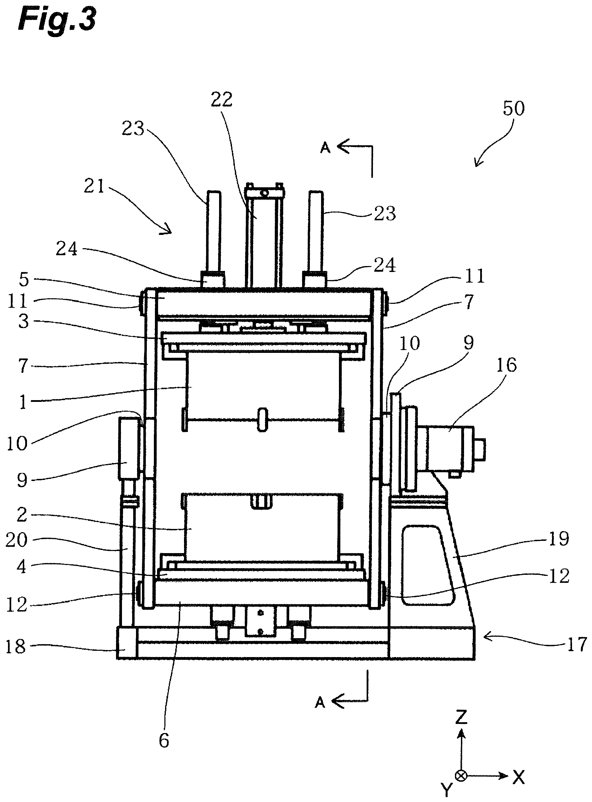

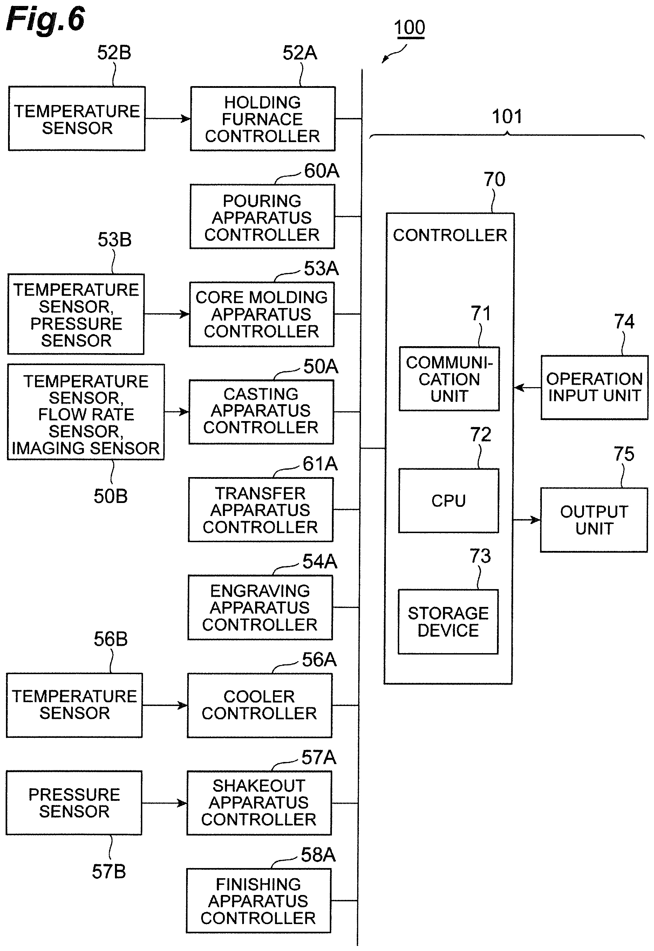

The casting apparatus 50 is so-called a gravity tilting mold casting apparatus that forms a casting by using an upper mold 1 and a lower mold 2 (refer to Figure 3), which can be opened, closed, and tilted, into which molten metal is poured by using gravity. Any material is available for the molten metal to be poured. For example, aluminum alloy or magnesium alloy is used for the molten metal. The casting apparatus 50 includes a variety of sensors, such as a temperature sensor for detecting temperature of a mold, a flow rate sensor for detecting an amount of cooling water, an imaging sensor for taking an image of an inner surface of an upper mold 1 or a lower mold 2, and a casting apparatus controller 50A (refer to Figure 6) described below, for example. The casting apparatus controller 50A executes a predetermined program to control operation of the casting apparatus 50. That is, each component of the casting apparatus 50 operates in response to a signal outputted from the casting apparatus controller 50A. Details of structure and operation of the casting apparatus 50 will be described below.

The holding furnace 52 is an apparatus that stores molten metal to be used in the casting apparatus 50. The holding furnace 52 has a function of maintaining the molten metal at a prescribed temperature, for example. The holding furnace 52 may also have a function of a melting furnace for melting metal to form molten metal. The holding furnace 52 includes a variety of sensors, such as a temperature sensor for detecting temperature of molten metal, and a holding furnace controller 52A described below (refer to Figure 6), for example. The holding furnace controller 52A controls condition of molten metal. That is, each component of the holding furnace 52 operates in response to a signal outputted from the holding furnace controller 52A.

The pouring apparatus 60 is an apparatus that transfers and pours molten metal to the casting apparatus 50 from the holding furnace 52. In the present embodiment, the pouring apparatus 60 transfers and pours molten metal to each of the plurality of casting apparatuses 50 from the holding furnace 52. The pouring apparatus 60 is a robot provided with an arm 60a and a ladle 60b, for example. The arm 60a has a multiple-joint structure, for example. The ladle 60b is attached to a leading end of the arm 60a. The pouring apparatus 60 includes a variety of sensors, such as a gyro sensor for detecting motion of the arm 60a, and a pouring apparatus controller 60A described below (refer to Figure 6), for example. The pouring apparatus controller 60A executes a predetermined program to control operation of the arm 60a and the ladle 60b. That is, the arm 60a and the ladle 60b of the pouring apparatus 60 operate in response to a signal outputted from the pouring apparatus controller 60A, and can take a variety of postures. The arm 60a is operated to scoop molten metal in the holding furnace 52 with the ladle 60b so that the molten metal is transferred to the casting apparatus 50 to be poured into the casting apparatus 50.

The core molding apparatus 53 molds a core to be used in the casting apparatus 50. Specifically, the core molding apparatus 53 injects core sand into a mold to form a core. The core molding apparatus 53 specifically includes a shell machine, a cold box molding machine, a greensand molding machine, and the like. The core molding apparatus 53 includes a variety of sensors, such as a temperature sensor for detecting temperature of a mold, pressure sensor for detecting pressure inside the molding apparatus (waveform data), and a core molding apparatus controller 53A described below (refer to Figure 6), for example. The core molding apparatus controller 53A executes a predetermined program to control operation of the core molding apparatus 53. That is, each component of the core molding apparatus 53 operates in response to a signal outputted from the core molding apparatus controller 53A. A core molded in the core molding apparatus 53 is removed onto a core removal table 53a.

The transfer apparatus 61 transfers a core from the core molding apparatus 53 to the casting apparatus 50, as well as a casting from the casting apparatus 50 to the engraving apparatus 54. In the present embodiment, the transfer apparatus 61 transfers a core molded by any one of the two core molding apparatuses 53 to any one of the three casting apparatuses 50. In addition, the transfer apparatus 61 transfers a casting formed by any one of the three casting apparatuses 50 to the engraving apparatus 54. The transfer apparatus 61 is a robot provided with an arm 61a and a holding unit 61b, for example. The arm 61a has a multiple-joint structure, for example. The holding unit 61b is attached to a leading end of the arm 61a and operates to hold an object. The transfer apparatus 61 includes a variety of sensors, such as a gyro sensor for detecting motion of the arm 61a, and a transfer apparatus controller 61A described below (refer to Figure 6), for example. The transfer apparatus controller 61A executes a predetermined program to control operation of the arm 61a and the holding unit 61b. That is, the arm 61a and the holding unit 61b of the transfer apparatus 61 operate in response to a signal outputted from the transfer apparatus controller 61A, and can take a variety of postures as well as hold a predetermined object. As a specific example, a core arranged on the core removal table 53a is held by operation of the arm 61a and the holding unit 61b, and then is set at a predetermined position in the casting apparatus 50. In addition, a casting is received from the casting apparatus 50 by operation of the arm 61a and the holding unit 61b, and then is set engraving apparatus 54 in a casting receiving port (not illustrated). The transfer apparatus 61 may transfer a casting in the order of completion of casting, or may transfer a casting from the casting apparatus 50 in a predetermined order (e.g., in order from the left).

The engraving apparatus 54 engraves a product identifier on a casting. The product identifier is information for identifying a casting, and is a numeral, a character, a symbol, a figure, or a combination thereof, for example. The figure includes a bar code, a QR code (registered trademark), and the like. A specific example of the product identifier is a product number. Hereinafter, there is described a case where the product identifier is a product number, for example. The engraving apparatus 54 engraves a product number on a casting in receiving order (time series), for example. The engraving apparatus 54 is connected to an engraving apparatus controller 54A described below (refer to Figure 6). Each component of the engraving apparatus 54 operates in response to a signal outputted from the engraving apparatus controller 54A.

The conveyor 55 transfers a casting engraved by the engraving apparatus 54. The conveyor 55 is a belt conveyor, a slat conveyor, or the like, for example. The conveyor 55 transfers a casting to the cooler 56.

The cooler 56 cools a casting formed by the casting apparatus 50. The cooler 56 performs heat exchange using liquid or gas, blowing, or natural cooling, for example, until temperature of a casting becomes a specified value or less. The cooler 56 includes a variety of sensors, such as a temperature sensor for detecting ambient temperature and atmospheric temperature, and a cooler controller 56A described below (refer to Figure 6), for example. The cooler controller 56A controls operation of the cooler 56. That is, each component of the cooler 56 operates in response to a signal outputted from the cooler controller 56A. A casting cooled by the cooler 56 is transferred to the shakeout apparatus 57. The transfer at this time may be performed by using a conveyor or a robot, which is not illustrated, or by an operator.

The shakeout apparatus 57 removes core sand inside a casting cooled by the cooler 56. The shakeout apparatus 57 removes core sand by performing chipping treatment of applying vibration to a casting, or shot blast treatment, for example. In addition, the shakeout apparatus 57 includes a variety of sensors, such as a pressure sensor for detecting pressure hitting a casting, and a shakeout apparatus controller 57A described below (refer to Figure 6), for example. The shakeout apparatus controller 57A controls operation of the shakeout apparatus 57. That is, each component of the shakeout apparatus 57 operates in response to a signal outputted from the shakeout apparatus controller 57A. A casting treated by the shakeout apparatus 57 is transferred to the finishing apparatus 58. The transfer at this time may be performed by using a conveyor or a robot, which is not illustrated, or by an operator.

The finishing apparatus 58 applies finishing processing to a casting. The finishing processing includes secondary shot treatment and deburring treatment, for example. In addition, the finishing apparatus 58 includes a variety of sensors, and a finishing apparatus controller 58A described below (refer to Figure 6), for example. The finishing apparatus controller 58A controls operation of the finishing apparatus 58. That is, each component of the finishing apparatus 58 operates in response to a signal outputted from the finishing apparatus controller 58A.

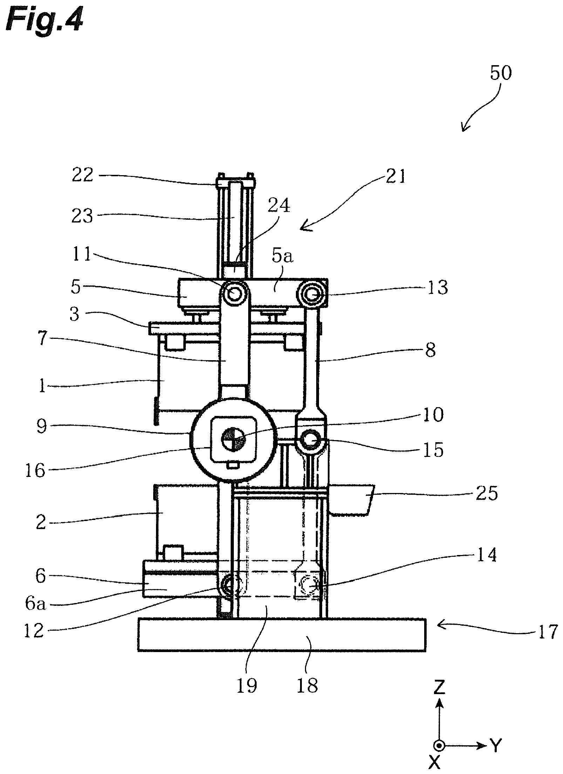

Subsequently, with reference to Figures 3 and 4, details of the casting apparatus 50 will be described. Figure 3 is a front view of the casting apparatus shown in Figure 1. Figure 4 is a side view of the casting apparatus shown in Figure 3.

As shown in Figures 3 and 4, the casting apparatus 50 includes a base frame 17, an upper frame 5, a lower frame 6, a mold closing mechanism 21, a left-and-right pair of main link members 7, a left-and-right pair sub-link members (auxiliary link members) 8, a rotation actuator (drive means) 16, and a ladle 25.

The base frame 17 includes a base 18, a drive side support frame 19, and a driven side support frame 20. The base 18 is a substantially plate-like member composed of a combination of a plurality of members, and is horizontally provided on an installation surface of the casting equipment 100. The drive side support frame 19 and the driven side support frame 20 are erected on the base 18 so as to face each other in a lateral direction (horizontal direction), and are fixed to the base 18. One of a pair of tilt rotation bearings 9 is provided in an upper end of the drive side support frame 19 and an upper end of the driven side support frame 20.

The upper frame 5 is arranged above the base frame 17. The upper mold 1 is attached to the upper frame 5. Specifically, the upper mold 1 is attached to a lower face of the upper frame 5 through an upper mold die base 3. The mold closing mechanism 21 for moving the upper mold 1 up and down is provided in the upper frame. Specifically, the upper frame 5 has the mold closing mechanism 21 built in, and the upper mold 1 is held by the mold closing mechanism 21 so as to be able to move up and down.

The mold closing mechanism 21 includes a mold closing cylinder 22, a left-and-right pair of guide rods 23, and a left-and-right pair of guide cylinders 24. The lower end of the mold closing cylinder 22 is attached to an upper face of the upper mold die base 3. The mold closing cylinder 22 is extended in an up-and-down direction (a vertical direction, here the Z direction) to lower the upper mold 1 through the upper mold die base 3, as well as is shortened in the up-and-down direction to raise the upper mold 1 through the upper mold die base 3. The guide rod 23 is attached to an upper face of the upper mold die base 3 through the guide cylinder 24 attached to the upper frame 5.

The lower frame 6 is arranged above the base frame 17 and below the upper frame 5. The lower mold 2 is attached to the lower frame 6. Specifically, the lower mold 2 is attached to an upper face of the lower frame 6 through a lower mold die base 4. In a state shown in each of Figures 3 and 4, the upper frame 5 and the lower frame 6 face each other in the up-and-down direction. Likewise, the upper mold 1 and the lower mold 2 face each other in the up-and-down direction.

Each of the pair of main link members 7 has upper and lower ends that are rotatably coupled to the upper frame 5 and the lower frame 6, respectively, to be oppositely arranged, and has a central portion provided with a tilt rotating shaft 10. Specifically, the pair of main link members 7 is oppositely arranged in the lateral direction (the horizontal direction, here the X direction), and each of the main link members 7 couples the upper frame 5 and the lower frame 6 to each other. The main link member 7 is provided with the tilt rotating shaft 10 at its central portion, a main link upper rotating shaft 11 at its upper end, and a main link lower rotating shaft 12 at its lower end.

The central portion of each of the pair of main link members 7 is rotatably coupled to one of the pair of tilt rotation bearings 9 through one of the pair of tilt rotating shafts 10. The upper end of each of the pair of main link members 7 is rotatably coupled to one of a pair of side faces 5a of the upper frame 5 through one of the pair of main link upper rotating shafts 11. The lower end of each of the pair of main link members 7 is rotatably coupled to one of a pair of side faces 6a of the lower frame 6 through one of the pair of main link lower rotating shafts 12. Attachment positions of the main link member 7 to the upper frame 5 and the lower frame 6 are set so that the main link member 7 is positioned at the center of each of the upper mold 1 and the lower mold 2 in a depth direction (Y direction) orthogonal to the lateral direction and the up-and-down direction when the upper mold 1 and the lower mold 2 are closed.

Each of the pair of sub-link members 8 is arranged parallel to one of the main link members 7. The sub-link member has upper and lower ends that are rotatably coupled to the upper frame 5 and the lower frame 6, respectively, to be oppositely arranged. The sub-link member has a central portion provided with a sub-link central portion rotating shaft 15. Specifically, the pair of sub-link members 8 is oppositely arranged in the lateral direction to couple the upper frame 5 and the lower frame 6 to each other. Each of the pair of sub-link members 8 is provided with one of a pair of sub-link upper rotating shafts 13 at its upper, one of a pair of sub-link lower rotating shafts 14 at its lower ends, and one of a pair of sub-link central portion rotating shafts 15 at its central portion. Each of the pair of sub-link members 8 is provided in one of the pair of side faces 5a and one of the pair of side faces 6a so as to be parallel to one of the pair of main link members 7. Length of the sub-link member 8 is the same as length of the main link member 7. The upper frame 5, the lower frame 6, the main link member 7, and the sub-link member 8, constitute a parallel link mechanism.

Each of the upper ends of the pair of sub-link members 8 is rotatably coupled to one of the pair of side faces 5a of the upper frame 5 through one of the pair of sub-link upper rotating shafts 13. The lower end of the sub-link member 8 is rotatably coupled to one of the pair of side faces 6a of the lower frame 6 through one the pair of sub-link lower rotating shafts 14. An attachment position of the sub-link member 8 is on a side, where the ladle 25 is arranged, with respect to the main link member 7. In a state of Figures 3 and 4, the sub-link central portion rotating shaft 15 is mounted on an upper face of the drive side support frame 19.

A rotation actuator 16 is arranged above the drive side support frame 19. The rotation actuator 16 is provided to be coupled to the tilt rotating shaft 10 of one of the pair of main link members 7. The rotation actuator 16 serves as drive means that tilts the upper mold 1 and the lower mold 2, or that allows the molds to separate from each other in the horizontal direction. The rotation actuator 16 may be any one of electrically-operated, hydraulically-operated, and pneumatically-operated.

In this way, the upper frame 5, the lower frame 6, the main link member 7, and the sub-link member 8, constitute the parallel link mechanism, and the tilt rotating shaft 10 of the main link member 7 is held in the base frame 17 outside a left-and-right pair of parallel link mechanisms by a tilt rotation bearing 9. Then, the sub-link central portion rotating shaft 15 of the sub-link member 8 is mounted on the base frame 17, and the rotation actuator 16 is attached to the tilt rotating shaft 10 of one of the main link members 7.

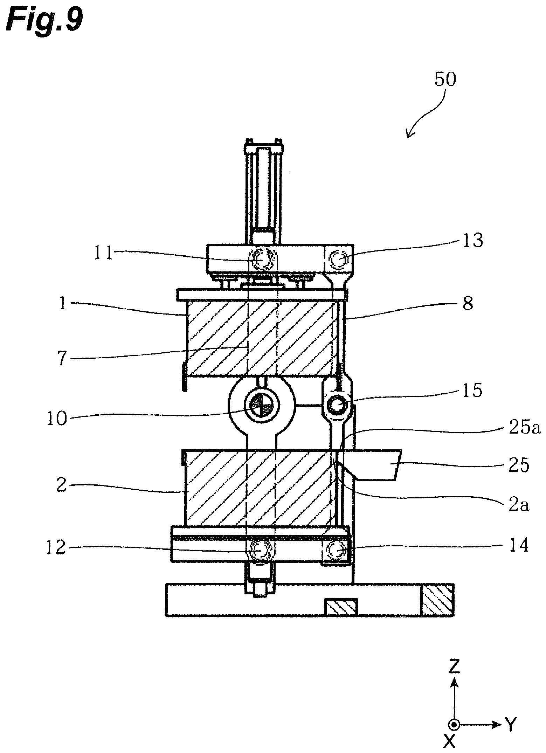

The ladle 25 is attached to an upper end of a side face of the lower mold 2, the side face facing the pouring apparatus 60. The ladle 25 includes a storage section that is formed thereinside to store molten metal, and a pouring port 25a (refer to Figure 9) that is connected to a receiving port 2a (refer to Figure 9) of the lower mold 2.

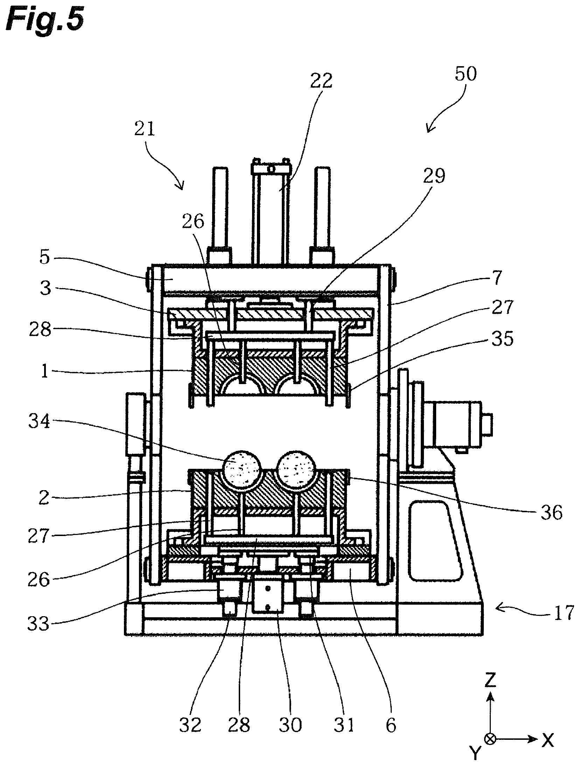

Figure 5 shows a section of the upper mold and the lower mold shown in Figure 3. Here, there is shown a state where a plurality of cores 34 are fitted in an upper face of the lower mold 2. As shown in Figure 5, the upper mold 1 includes a built-in pushing out plate 28 to which a pair of pushing out pins 26 and a pair of return pins 27 are coupled. The upper frame 5 is provided in its lower face with a plurality of push rods 29 that penetrates the upper mold die base 3. Length of the push rod 29 is set so that the push rod 29 pushes down the pushing out plate 28 when the mold closing cylinder 22 is shortened to allow the upper mold 1 to reach an ascending end. The ascending end is the highest position of the upper mold 1 that can be obtained by shortening the mold closing cylinder 22.

The lower frame 6 includes a built-in pushing out cylinder 30. An upper end of the pushing out cylinder 30 is attached to a lower face of a pushing out member 31. A left-and-right pair of guide rods 32 is attached to the lower face of the pushing out member 31 through a guide cylinder 33 attached to the lower frame 6.

As with the upper mold 1, the lower mold 2 includes the built-in pushing out plate 28 to which the pair of pushing out pins 26 and the pair of return pins 27 are coupled. In the lower mold 2, there is a positional relationship in which the pushing out member 31 is raised by elongating action of the pushing out cylinder 30 to push up the pushing out plate 28, thereby allowing the pair of pushing out pins 26 and of return pins 27 to rise. The return pins 27 of the upper mold 1 and the lower mold 2 are pushed back when the molds are closed because their leading ends are pushed back by a mating face of the opposite mold or by leading ends of opposite return pins 27. Accordingly, the pushing out pins 26 coupled to the pushing out plate 28 are also pushed back. In addition, when the molds are closed, the pushing out member 31 reaches a descending end position by shortening action of the pushing out cylinder 30. The descending end is the lowest position of the lower mold 2 that can be obtained by shortening the pushing out cylinder 30.

A pair of positioning keys 35 is attached to the periphery of a lower portion of the upper mold 1. A pair of positioning key grooves 36 is attached to the periphery of an upper portion of the lower mold 2 according to the pair of positioning keys 35. When the upper mold 1 and the lower mold 2 are closed, the positioning key 35 is fitted into the positioning key groove 36. Since the positioning keys 35 and the positioning key grooves 36 allow the upper mold 1 and the lower mold 2 to be positioned in the horizontal direction, it is possible to prevent the upper mold 1 and the lower mold 2 from being displaced from each other when closed.

Figure 6 is a functional block diagram of the data management system according to the embodiment. As described above, the data management system is connected to casting equipment 100 including: the casting apparatus 50 configured to form a casting by using upper mold 1 and lower mold 2 to which molten metal is poured by using gravity, the upper mold 1 and lower mold 2 being able to be opened, closed, and tilted; and the engraving apparatus 54 configured to engrave a product identifier on a casting, and controls data related on the casting on casting process.

As illustrated in Figure 6, a data management system 101 includes a controller 70, an operation input unit 74, and an output unit 75. The controller 70 is connected to a network composed of a Local Area Network (LAN) and a dedicated line. The controller 70 is communicatively connected to the components of the casting equipment 100 (the casting apparatus controller 50A, the holding furnace controller 52A, the pouring apparatus controller 60A, the transfer apparatus controller 61A, the core molding apparatus controller 53A, the engraving apparatus controller 54A, the cooler controller 56A, the shakeout apparatus controller 57A, and the finishing apparatus controller 58A). In addition, the components of the casting equipment 100, to be an object of the data management system 101, are communicatively connected to each other. Communicability of each of the components of the casting equipment 100 is not an essential requirement, and the apparatuses may not be communicatively connected to each other depending on a kind of data to be controlled.

The controller 70 controls information on the casting equipment 100. The controller 70 includes a communication unit 71 (acquisition unit), a central processing unit (CPU) 72 (control unit), and a storage device 73 (storage device), for example.

The communication unit 71 realizes communication through the network connected. The communication unit 71 is a communication device, such as a network card, for example. The communication unit 71 receives information from the operation input unit 74 and the casting equipment 100, and transmits information to the output unit 75. The CPU 72 controls operation of the controller 70. The CPU 72 causes the storage device 73 to store information acquired from the components of the casting equipment 100. The storage device 73 stores data, and is a read only memory (ROM), a random access memory (RAM), or a hard disk, for example.

The operation input unit 74 is an input device, such as a keyboard, for example. The output unit 75 is an output device, such as a display and a printer, for example. An administrator can output data of a casting during forming of the casting to the output unit 75 by operating the operation input unit 74.

The holding furnace controller 52A includes a communication unit, a CPU, and a storage device, which are not illustrated. The holding furnace controller 52A controls molten metal information. The molten metal information shows properties of the molten metal. The molten metal information includes a date and temperature of the molten metal, for example. The holding furnace controller 52A is connected to various sensors 52B, such as a temperature sensor, to monitor temperature of molten metal. As a specific example, the holding furnace controller 52A causes a storage device to store temperature of molten metal at predetermined intervals by associating the temperature with a date. Then, the holding furnace controller 52A communicates with the pouring apparatus controller 60A to acquire timing when the pouring apparatus 60 scoops out molten metal. Then, the holding furnace controller 52A acquires a date and a time of scooping out molten metal by using a system clock, for example, and stores them in its storage device. The time of scooping out molten metal is a time when the pouring apparatus 60 starts scooping out the molten metal. The holding furnace controller 52A transmits molten metal information to the controller 70 through a communication unit and a network. When transmitting the molten metal information to the controller 70, the holding furnace controller 52A gives a serial N1 for identifying the molten metal information to the molten metal information, and transmits the information. The serial means solid information. Alternatively, the serial N1 may be given to molten metal information at timing when the controller 70 receives the molten metal information.

The pouring apparatus controller 60A includes a communication unit, a CPU, and a storage device, which are not illustrated. The storage device provided in the pouring apparatus controller 60A stores jobs for performing scooping operation, transferring operation, and pouring operation, for example. The CPU of the pouring apparatus controller 60A executes the jobs to control postures of the arm 60a and the ladle 60b. As described above, the pouring apparatus controller 60A transmits timing of scooping out molten metal to the holding furnace controller 52A. The pouring apparatus controller 60A also controls transfer information. The transfer information relates to transfer in the pouring apparatus 60. The transfer information includes a date and a time of transferring molten metal, for example. The time of transferring molten metal is from a time of scooping out molten metal to a start of pouring the molten metal. The pouring apparatus controller 60A acquires a date and a time of transferring molten metal by using a system clock, for example, and stores them in its storage device. The pouring apparatus controller 60A transmits transfer information to the controller 70 through a communication unit and a network. When transmitting the molten metal information to the controller 70, the pouring apparatus controller 60A gives a serial N2 for identifying the transfer information to the transfer information, and transmits the information. Alternatively, the serial N2 may be given to transfer information at timing when the controller 70 receives the transfer information.

The core molding apparatus controller 53A includes a communication unit, a CPU, and a storage device, which are not illustrated. The core molding apparatus controller 53A controls core information. The core information relates to a core molded by the core molding apparatus. The core information includes a date, a molding time, a shot number, a mold type, a mold number, a cycle time, a burning time, pressure waveform data during molding process, and a mold temperature, for example. The molding time refers to a time of staring to close a mold. The shot number is acquired by counting the number of times of molding per molding date. The mold type refers to a kind of mold, and a name applied to a shape to be molded. The mold number refers to a number of a mold, and is assigned when there is a plurality of molds of the same kind. The cycle time is from a start of molding to a start of subsequent molding. The pressure waveform data shows time-dependent pressure inside the molding apparatus. The core molding apparatus controller 53A is connected to various sensors 53B, such as a temperature sensor and a pressure sensor, to monitor pressure waveform data and a mold temperature. The core molding apparatus controller 53A acquires a date, a molding time, a cycle time, and a burning time by using a system clock, for example, and stores them in its storage device. The core molding apparatus controller 53A also counts a number of shots. In the storage device of the core molding apparatus controller 53A, a mold type and a mold number of an attached mold are stored as specification information. The core molding apparatus controller 53A transmits core information to the controller 70 through a communication unit and a network. When transmitting the core information to the controller 70, the core molding apparatus controller 53A gives a serial N3 for identifying the core information to the core information, and transmits the information. Alternatively, the serial N3 may be given to core information at timing when the controller 70 receives the core information.

The casting apparatus controller 50A includes a communication unit, a CPU, and a storage device, which are not illustrated. The casting apparatus controller 50A controls casting information. The casting information relates to casting conditions during casting process by the casting apparatus 50. The casting information includes a date, a casting time, a shot number, a mold type, a tilting pattern, a mold number, a cycle time, a mold temperature, a cooling time, a flow rate of mold cooling water, a flow rate of mold cooling air, a temperature of mold cooling water, and imaging data, for example.

The tilting pattern is information showing a predetermined tilting operation. For example, the tilting pattern is information showing angle-dependent speed of tilting a mold. The tilting pattern includes a pattern of tilting a mold at uniform speed, and a pattern of varying speed for each predetermined angle range, for example. As a more specific example, a tilting pattern has a speed X within an angle range (e.g., 0 to 5°), and a speed Y within a subsequent angle range (e.g., 5 to 10°). When a tilting pattern is achieved by a servo motor, the tilting pattern may be acquired by being substituted with information on the servo motor (driving electric power and a load factor), for example.

The mold temperature is a temperature of a mold during casting process, and includes a temperature of an upper mold 1 and a temperature of a lower mold 2. For example, the mold temperature is acquired at minute intervals (e.g., every 0.5 second), and temperature transition can be grasped by using the mold temperature. A mold temperature in the casting apparatus 50 that pours molten metal by using gravity becomes a high temperature as compared with so-called a die casting method. The cooling time is a time for coagulating molten metal, as well as a time of holding a tilted posture described below. Specifically, the cooling time is a time from when a tilted posture becomes a targeted posture (pouring molten metal is completed) until the tilted posture is released. In the casting apparatus 50 that pours molten metal by using gravity, a time for coagulating molten metal becomes long as compared with so-called a die casting method, and thus measurement for longer time is needed.

The casting apparatus controller 50A is connected to various sensors 50B, such as a temperature sensor, a flow rate sensor, and an imaging sensor, to monitor a mold temperature, a flow rate of mold cooling water, a flow rate of mold cooling air, a temperature of mold cooling water, and imaging data, for example. In addition, the casting apparatus controller 50A acquires a date, a casting time, and a cycle time by using a system clock, for example, and stores them in its storage device. The casting apparatus controller 50A also counts a number of shots. In the storage device of the casting apparatus controller 50A, a mold type, a mold number, a tilting pattern, and a cooling time, of an attached mold are stored. The casting apparatus controller 50A transmits casting information to the controller 70 through a communication unit and a network. When transmitting the casting information to the controller 70, the casting apparatus controller 50A gives a product number to the casting information, and transmits the information. Alternatively, the product number may be given to casting information at timing when the controller 70 receives the casting information.

The transfer apparatus controller 61A includes a communication unit, a CPU, and a storage device, which are not illustrated. The storage device provided in the transfer apparatus controller 61A stores jobs for performing core taking-out operation, core transferring operation, core setting operation, casting receiving operation, and casting transferring operation, for example. The CPU of the transfer apparatus controller 61A executes the jobs to control postures of the arm 61a and the holding unit 61b. When the core taking-out operation of taking out a core from the core molding apparatus 53 is performed, the transfer apparatus controller 61A transmits the fact of performing the operation to the controller 70 through a communication unit and a network. In addition, when the core setting operation of setting a core in a mold in the casting apparatus 50 is performed, the transfer apparatus controller 61A transmits the fact of performing the operation to the controller 70 through the communication unit and the network.

The engraving apparatus controller 54A includes a communication unit, a CPU, and a storage device, which are not shown. The engraving apparatus controller 54A receives a product number through the communication unit and a network, and causes the product number to be engraved on a casting transferred by the transfer apparatus 61. The product number is created by the casting apparatus controller 50A, and then is transmitted to the engraving apparatus controller 54A. Alternatively, the product number may be created by the controller 70, and then may be transmitted to the engraving apparatus controller 54A.

The cooler controller 56A includes a communication unit, a CPU, and a storage device, which are not illustrated. The cooler controller 56A controls cooling information. The cooling information relates to cooling by the cooler 56. The cooling information includes a date, a cooling start time, a cooling complete time, ambient temperature, and atmospheric temperature, for example. The ambient temperature is temperature inside the cooler 56. The cooler controller 56A is connected to various sensors 56B, such as a temperature sensor, to monitor ambient temperature, atmospheric temperature, and the like. The cooler controller 56A acquires a date, a cooling start time, and a cooling complete time by using a system clock, for example, and stores them in its storage device. The cooler controller 56A transmits cooling information to the controller 70 through the communication unit and a network. When transmitting the cooling information to the controller 70, the cooler controller 56A gives a serial N4 for identifying the cooling information to the cooling information, and transmits the information. Alternatively, the serial N4 may be given to cooling information at timing when the controller 70 receives the cooling information.

The shakeout apparatus controller 57A includes a communication unit, a CPU, and a storage device, which are not illustrated. The shakeout apparatus controller 57A controls shakeout information. The shakeout information relates to shakeout by the shakeout apparatus 57. The shakeout information includes a date, a sand fracture time, and air pressure, for example. The shakeout apparatus controller 57A is connected to various sensors 57B, such as a pressure sensor, to monitor air pressure and the like. In addition, the shakeout apparatus controller 57A acquires a date and a sand fracture time by using a system clock, for example, and stores them in its storage device. The shakeout apparatus controller 57A transmits shakeout information to the controller 70 through the communication unit and a network. When transmitting the shakeout information to the controller 70, the shakeout apparatus controller 57A gives a serial N5 for identifying the shakeout information to the shakeout information, and transmits the information. Alternatively, the serial N5 may be given to shakeout information at timing when the controller 70 receives the shakeout information.

The finishing apparatus controller 58A includes a communication unit, a CPU, and a storage device, which are not illustrated. The finishing apparatus controller 58A controls finishing information. The finishing information relates to finishing processing by the finishing apparatus 58. The finishing information includes a date, a finishing start time, a finishing program number, a blade for use, and frequency of use of a blade, for example. The finishing program number is an identifier of a program provided for each finishing processing. The blade for use is used for deburring treatment. The finishing apparatus controller 58A acquires a date and a finishing start time by using a system clock, for example, and stores them in its storage device. The finishing apparatus controller 58A also counts the frequency of use of a blade. In the storage device of the finishing apparatus controller 58A, a number of finishing program in use and information on a blade in use are stored. The finishing apparatus controller 58A transmits finishing information to the controller 70 through the communication unit and a network. When transmitting the finishing information to the controller 70, the finishing apparatus controller 58A gives a serial N6 for identifying the finishing information to the finishing information, and transmits the information. Alternatively, the serial N6 may be given to finishing information at timing when the controller 70 receives the finishing information.

A method of transmitting information to the controller 70 from each component is not particularly limited. For example, information may be inputted into the controller 70 by using an external recording medium, or may be manually inputted into the controller 70.

As described above, the communication unit 71 of the controller 70 acquires a product number and a tilting pattern of each of the upper mold 1 and the lower mold 2 in the casting apparatus 50. Alternatively, the communication unit 71 acquires a product number and temperature transition during casting of each of the upper mold 1 and the lower mold 2 in the casting apparatus 50. Alternatively, the communication unit 71 acquires a product number and imaging data acquired by taking an image of an inner surface of the upper mold 1 or the lower mold 2 in the casting apparatus 50. In addition, the communication unit 71 of the controller 70 also can acquire the molten metal information, the transfer information, the core information, the cooling information, the shakeout information, and the finishing information, described above.

The CPU 72 of the controller 70 causes the storage device 73 to store a product number and a tilting pattern, acquired by the communication unit 71, by associating them with each other. Alternatively, the CPU 72 causes the storage device 73 to store a product number and temperature transition during casting of each of the upper mold 1 and the lower mold 2, acquired by the communication unit 71, by associating them with each other. Alternatively, the CPU 72 causes the storage device 73 to store a product number and imaging data acquired by taking an image of the inner surface of the upper mold 1 or the lower mold 2, acquired by the communication unit 71, by associating them with each other. In addition, the CPU 72 also can associate a product number with the molten metal information, the transfer information, the core information, the cooling information, the shakeout information, and the finishing information, to cause the storage device 73 to store the associations. Each of the associations refers to a state where one information allows another information to be identified.

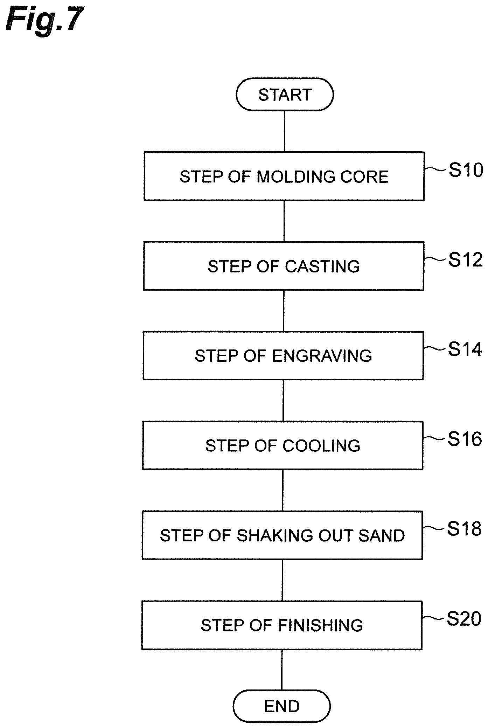

Next, an example of a casting method using the casting equipment 100 will be described. Figure 7 is a flowchart of an example of a manufacturing method using the casting equipment of Figure 1. As illustrated in Figure 7, first a step of molding a core (S10) is performed. In the step of molding a core, a core is molded by the core molding apparatus 53. At this time, core information is transmitted to the controller 70 from the core molding apparatus controller 53A.

Subsequently, a step of casting (S12) is performed. In the step of casting, a casting is formed by the pouring apparatus 60, the transfer apparatus 61, and the casting apparatus 50. Details of this processing will be described below. At this time, molten metal information is transmitted to the controller 70 from the holding furnace controller 52A. Transfer information is transmitted to the controller 70 from the pouring apparatus controller 60A. Casting information is transmitted to the controller 70 from the casting apparatus controller 50A. Then, the core information, the molten metal information, the transfer information, and the casting information are associated with each other through a product number on the basis of information outputted to the controller 70 from the transfer apparatus controller 61A. The transfer apparatus 61 transfers a casting to the engraving apparatus 54.

Subsequently, a step of engraving (S14) is performed. In the step of engraving, a product number is engraved on a casting by the engraving apparatus 54. The conveyor 55 transfers an engraved casting to the cooler 56.

Subsequently, a step of cooling (S16) is performed. In the step of cooling, a casting is cooled by the cooler 56. At this time, cooling information is transmitted to the controller 70 from the cooler controller 56A. A cooled casting is transferred to the shakeout apparatus 57 by an operator, for example.

Subsequently, a step of shaking out sand (S18) is performed. In the step of shaking out sand, core sand inside a casting is removed by the shakeout apparatus 57. At this time, shakeout information is transmitted to the controller 70 from the shakeout apparatus controller 57A. The casting is transferred to the finishing apparatus 58 by an operator, for example.

Subsequently, a step of finishing (S20) is performed. In the step of finishing, finishing processing is applied to a casting by the finishing apparatus 58. At this time, finishing information is transmitted to the controller 70 from the finishing apparatus controller 58A. Up to this point, the flow illustrated in Figure 7 is ended, and then the casting is ready to be shipped as a product.

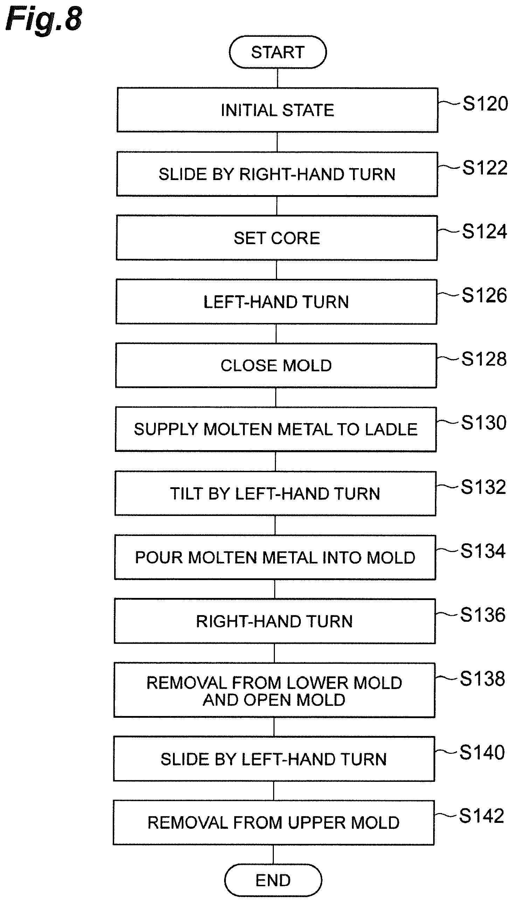

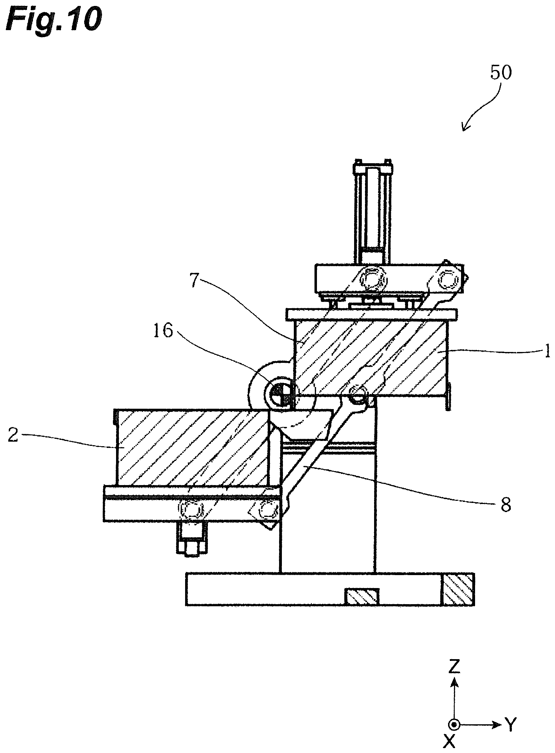

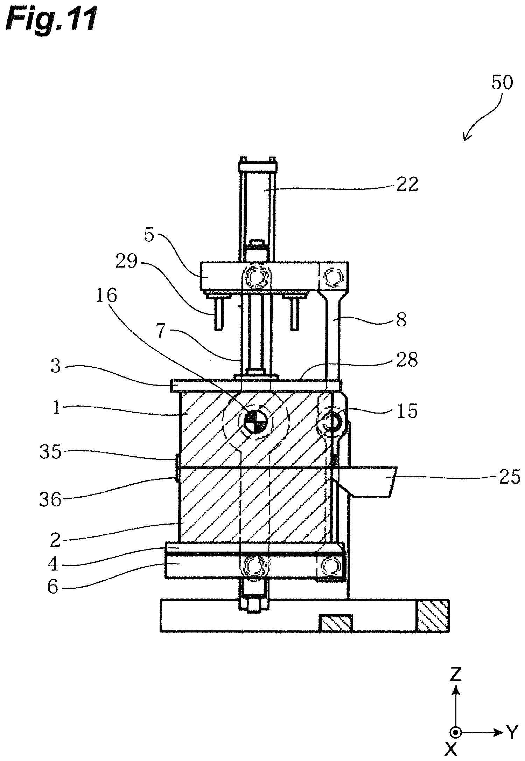

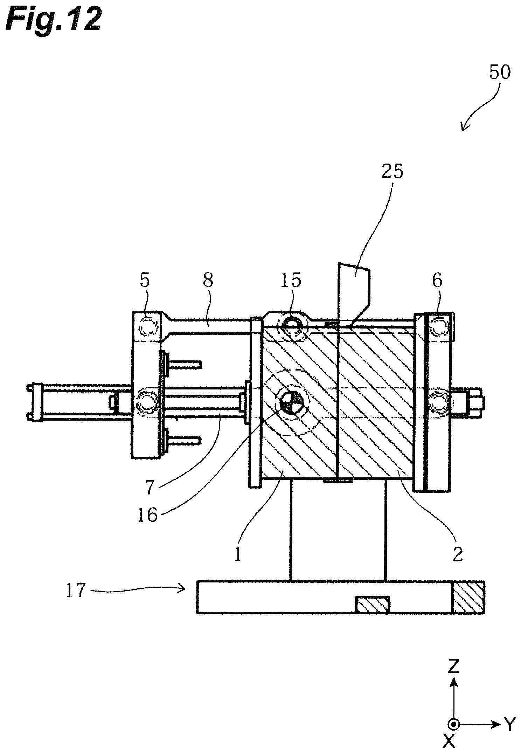

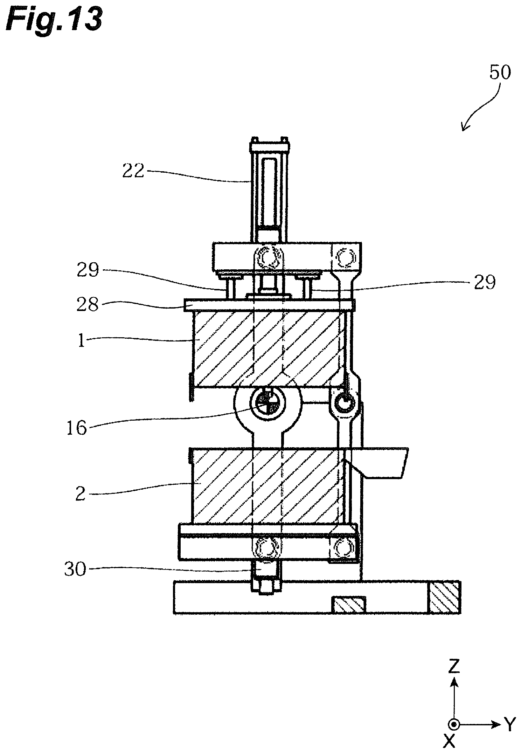

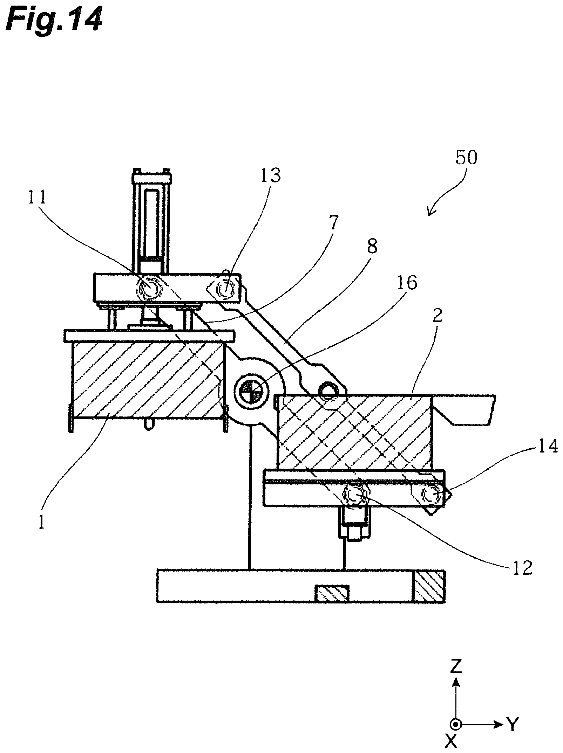

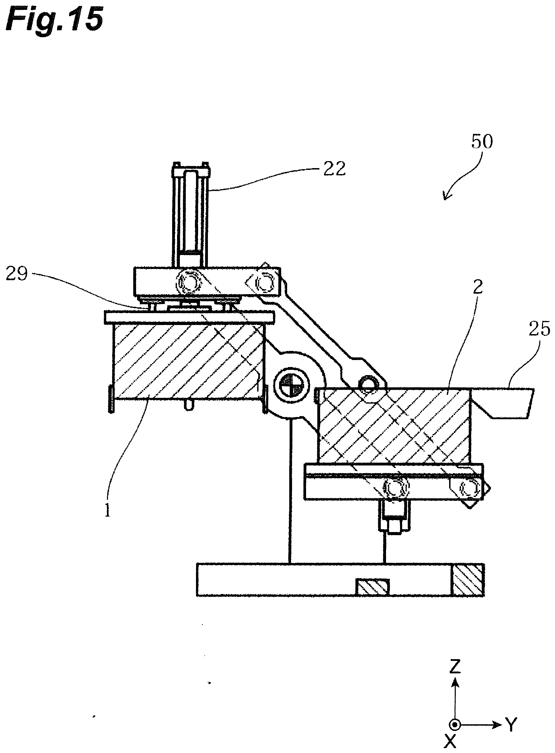

Subsequently, with reference to Figures 8 to 15, details of the step of casting by the casting equipment 100 will be described. Figure 8 is a flowchart illustrating an example of the step of casting using the casting equipment. Figure 9 is an illustration viewed from arrows A-A in Figure 3 to describe an initial state. Figure 10 illustrates a second separation state after the upper and lower molds are slid by operation of a parallel link mechanism. Figure 11 is an illustration to describe the mold closed state where the upper mold and the lower mold are closed. Figure 12 shows the upper mold and the lower mold closed that are turned at 90°. Figure 13 shows the upper mold that is lifted up to an intermediate position. Figure 14 shows the first separation state after the upper mold and the lower mold are slid. Figure 15 shows a state where the upper mold is lifted up to the ascending end from the state of Figure 11.

As shown in Figure 8, first, the casting apparatus 50 is set in the initial state of a series of casting steps (S120). In the initial state, the upper mold 1 is positioned at the ascending end, and the pair of main link members 7 and the pair of sub-link members 8 are perpendicular to an installation surface of the casting equipment 100.

Subsequently, as shown in Figures 8 and 10, the casting apparatus 50 allows the rotation actuator 16 to turn clockwise. In the present embodiment, a clockwise turn is a right-hand turn, and a reverse turn is a left-hand turn. Accordingly, each of the upper mold 1 and the lower mold 2 slides in a direction opposite to each other along an arc by operation of the parallel link mechanism (S122). Specifically, the upper mold 1 and the lower mold 2, facing each other, move around the tilt rotating shaft 10 as a center axis in a circular motion of the right-hand turn so that the upper mold 1 and the lower mold 2 move so as to separate from each other in the horizontal direction. Then, the upper mold 1 moves toward the pouring apparatus 60 (refer to Figure 1) to become the second separation state. In the present embodiment, a state where the lower mold 2 moves toward the pouring apparatus 60 is indicated as the first separation state, and a state where the upper mold 1 moves toward the pouring apparatus 60 is indicated as the second separation state. That is, the first separation state (refer to Figure 14) is a state where the rotation actuator 16 moves the upper mold 1 in a direction away from the pouring apparatus 60 as well as the lower mold 2 in a direction approaching the pouring apparatus 60 to allow the upper mold 1 and the lower mold 2 to separate from each other in the horizontal direction. The second separation state (refer to Figure 10) is a state where the rotation actuator 16 moves the upper mold 1 in the direction approaching the pouring apparatus 60 as well as the lower mold 2 in the direction away from the pouring apparatus 60 to allow the upper mold 1 and the lower mold 2 to separate from each other in the horizontal direction. An image of an inner surface of each of the molds may be taken while the molds are slid. For example, imaging data on an inner surface of the upper mold 1 may be acquired during the first separation state or the second separation state by providing an imaging sensor in a lower frame 6 to allow the inner surface of the upper mold 1 to be within an imaging range. Alternatively, imaging data on an inner surface of the lower mold 2 may be acquired during the first separation state or the second separation state by providing an imaging sensor in an upper frame 5 to allow the inner surface of the lower mold 2 to be within an imaging range.

Next, the core 34 molded by the core molding apparatus 53 is fitted in a prescribed position in the lower mold 2 (S124). Operation of fitting the core 34 is performed by the transfer apparatus 61. In the second separation state, a space above the lower mold 2 is opened as well as the ladle 25 attached to the lower mold 2 is not brought into contact with the upper mold 1. In this manner, since the space above the lower mold 2 is opened, it is possible to fit a core in the lower mold 2 in safety.

Subsequently, the casting apparatus 50 allows the rotation actuator 16 to perform the left-hand turn so that the casting apparatus 50 temporarily returns to the initial state of Figure 9 (S126). Next, as shown in Figures 8 and 11, the casting apparatus 50 allows the mold closing cylinder 22 to elongate to close the upper mold 1 and the lower mold 2 (S128). Then, the positioning key 35 of the upper mold 1 and the positioning key groove 36 of the lower mold 2 are fitted with each other to fix the upper mold 1 and the lower mold 2. In addition, the molds are closed not to allow the main link member 7, the sub-link member 8, the main link upper rotating shaft 11, the main link lower rotating shaft 12, the sub-link upper rotating shaft 13, and the sub-link lower rotating shaft 14, to turn, whereby the upper mold 1, the lower mold 2, the upper frame 5, the lower frame 6, the main link member 7, and the sub-link member 8, are integrated.

Next, when the upper mold 1 and the lower mold 2 are closed to become the mold closed state, the pouring apparatus 60 (refer to Figure 1) supplies molten metal to the ladle 25 (S130). Specifically, in step S126 described above, when the upper mold 1 and the lower mold 2 return to the initial state of Figure 9, the pouring apparatus 60 transfers molten metal to the casting apparatus 50 from the holding furnace 52 (refer to Figure 2). That is, the pouring apparatus 60 scoops molten metal in the holding furnace 52 with the ladle 60b (refer to Figure 2), and moves the ladle 60b to a position at which the molten metal can be poured into the ladle 25 to prepare pouring. After that, in step S128, when the upper mold 1 and the lower mold 2 become the mold closed state, the pouring apparatus 60 pours the molten metal in the ladle 60b into the ladle 25. In this way, the pouring apparatus 60 starts transferring the molten metal before the casting apparatus 50 is ready to receive the molten metal.

Subsequently, as shown in Figures 8 and 12, the casting apparatus 50 allows the rotation actuator 16 to perform the left-hand turn at approximately 90° to allow the upper mold 1 and the lower mold 2 to become a tilt state (a tilted posture) (S132). Accordingly, the sub-link central portion rotating shaft 15 is lifted up from an upper face of the base frame 17, on which the sub-link central portion rotating shaft 15 is mounted. As a result, the upper mold 1, the lower mold 2, the upper frame 5, the lower frame 6, the main link member 7, and the sub-link member 8, integrated after the molds are closed, are turned to tilt the ladle 25 to pour the molten metal in the ladle 25 into a cavity formed between the upper mold 1 and the lower mold 2 (S134).

After the step S134 described above is finished, a state of Figure 12 is held for a prescribed time to wait for coagulation of the molten metal poured. As described above, although the rotation actuator 16 performs the left-hand turn at approximately 90° here, the rotation actuator 16 may be turned at a required angle within a range from 45° to 130° (preferably 45° to 90°).

Subsequently, the rotation actuator 16 is allowed to perform the right-hand turn so that the casting apparatus 50 temporarily returns to the state of Figure 11 (S136). Next, mold removal from the lower mold 2 and mold opening are performed in parallel (S138). Mold opening is performed as shown in Figures 8 and 13, and simultaneously the mold removal from the lower mold 2 is also performed. Mold opening is started when the casting apparatus 50 operates the mold closing cylinder 22. Specifically, the casting apparatus 50 allows the mold closing cylinder 22 to be shortened to raise the upper mold 1, thereby starting mold opening of the upper mold 1 and the lower mold 2. Then, elongation of the pushing out cylinder 30 is started simultaneously with shortening action of the mold closing cylinder 22. The pushing out cylinder 30 is elongated to push out the pushing out pin 26 (refer to Figure 5) built in the lower mold 2. Accordingly, a casting (not shown) formed by coagulation of the molten metal in the upper mold 1 and the lower mold 2 is removed from the lower mold 2 to be held in the upper mold 1. Then, the casting apparatus 50 raises the upper mold 1 to a prescribed position to complete mold opening. The prescribed position is a position where a leading end of the push rod 29 and an upper face of the pushing out plate 28 of the upper mold 1 are not brought into contact with each other. In other words, the prescribed position is a position where there is a clearance between the leading end of the push rod 29 and the upper face of the pushing out plate 28 of the upper mold 1.

Next, as shown in Figures 8 and 14, the casting apparatus 50 allows the rotation actuator 16 to perform the left-hand turn (S140). Accordingly, the casting apparatus 50 allows the upper mold 1 and the lower mold 2 to slide along an arc by operation of the parallel link mechanism to separate from each other in the horizontal direction. Then, the upper mold 1 moves toward the conveyor 55 (refer to Figure 2), or the lower mold 2 moves in a direction approaching the pouring apparatus 60 (refer to Figure 1), to become the first separation state. An angle of the left-hand turn of the rotation actuator 16 at the time is approximately 30° to 45° at which a space below the upper mold 1 is opened.

Subsequently, as shown in Figures 8 and 15, the casting apparatus 50 allows the mold closing cylinder 22 to be shortened to raise the upper mold 1 to the ascending end. Accordingly, the leading end of the push rod 29 pushes out the pushing out pin 26 (refer to Figure 5) relatively with respect to the upper mold 1 through the pushing out plate 28 built in the upper mold 1. As a result, a casting held in the upper mold 1 is removed from the upper mold 1 (S142). The casting removed from the upper mold 1 is received by the transfer apparatus 61. After that, the casting is transferred to the engraving apparatus 54. As described above, the series of casting steps is completed, and then the casting is formed by the casting equipment 100. In addition, when the casting steps above are repeated, it is possible to continuously form castings.

At the time of mold change, first the upper mold 1 is lowered from a state shown in Figure 9 to close the upper mold 1 and the lower mold 2 as shown in Figure 11. Then, attachment of the upper mold 1 by the upper frame 5 is released so that the upper mold 1 is removed from the upper mold die base 3. Next, the mold closing cylinder 22 is operated to be shortened to raise the upper mold die base 3, and then the upper mold 1 is mounted on the lower mold 2. From this state, when the rotation actuator 16 performs the right-hand turn at about 45°, space above the upper mold 1 and the lower mold 2, which are matched with each other, is opened. In this state, when the lower mold 2 is removed from the lower mold die base 4, the integrated upper mold 1 and lower mold 2 can be removed from the casting apparatus 50. In addition, when another integrated upper mold 1 and lower mold 2 is attached to the lower mold die base 4 in a state where the upper mold 1 and the lower mold 2 are removed and then reverse operation is performed, it is possible to safely and easily perform the mold change.

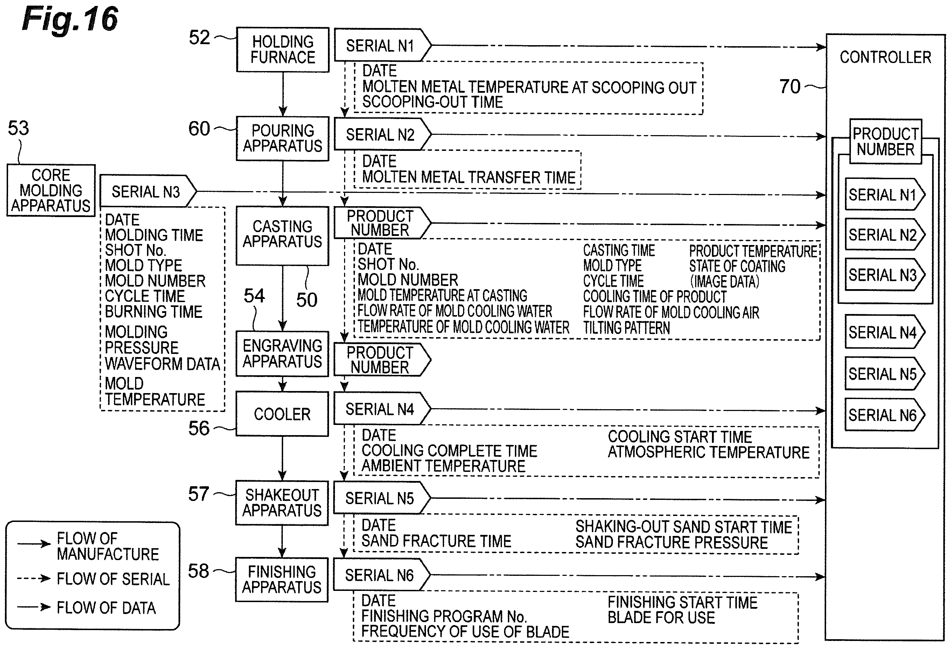

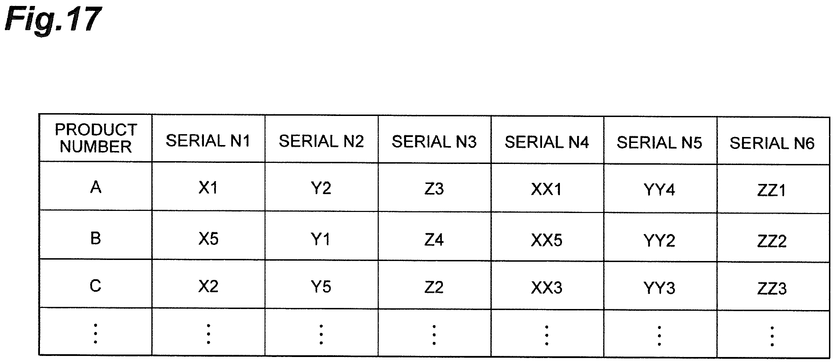

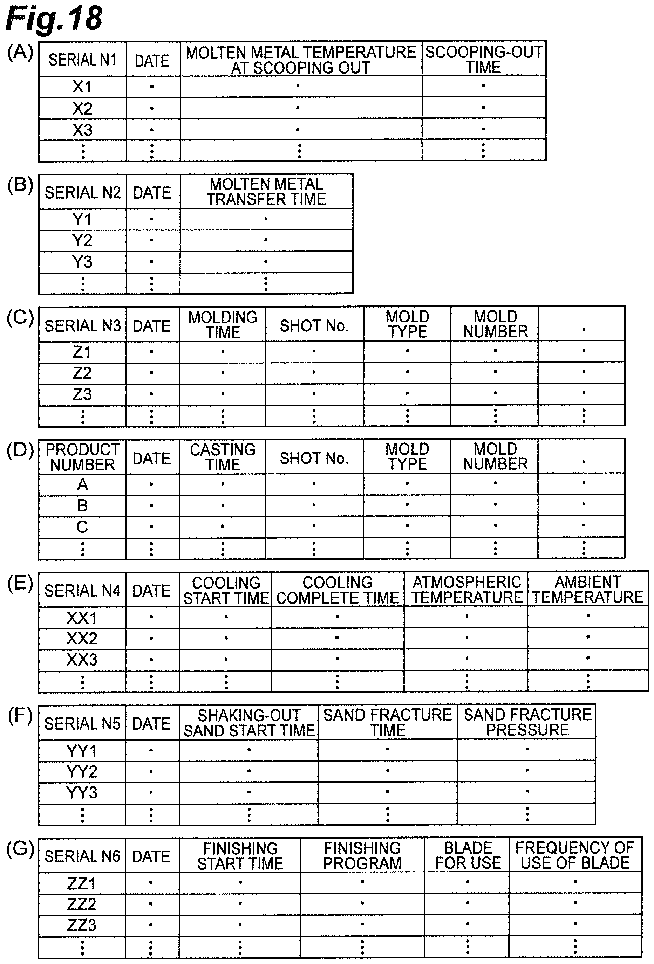

Subsequently, a flow of data and a storage form of the data in each step described in Figures 7 and 8 will be described. Figure 16 illustrates a flow of data in a data management system according to the embodiment. Figure 17 is a table in which a product number is associated with information in each step. Figure 18 is a table showing information in each step.

As illustrated in Figure 16, the core molding apparatus controller 53A transmits core information to which the serial N3 is given to the controller 70 in a step of molding a core (S10 in Figure 7). The controller 70 stores the core information in the storage device 73 by associating the information with the serial N3. Figure 18(C) is a table in which the serial N3 and the core information are recorded by being associated with each other. When "Z3" is given as the serial N3, for example, the controller 70 creates a row of the "Z3" and stores the row.

In the step of casting (refer to S12 in Figure 7, and Figure 8), the transfer apparatus controller 61A transmits the fact that core taking-out operation of taking out a core from the core molding apparatus 53 has been performed to the controller 70. In addition, the transfer apparatus controller 61A transmits the fact that core setting operation of setting a core in a mold of the casting apparatus 50 has been performed to the controller 70. The controller 70 determines that a core taken out and set using the transfer apparatus controller 61A is associated with the serial N3 (i.e. "Z3"). Then, the pouring apparatus controller 60A transmits timing of scooping out molten metal to the holding furnace controller 52A, and scooping out molten metal is started. The holding furnace controller 52A transmits a serial N1 and molten metal information to the controller 70. The controller 70 stores the molten metal information in the storage device 73 by associating the information with the serial N1. Figure 18(A) is a table in which the serial N1 and the molten metal information are recorded by being associated with each other. When "X1" is given as the serial N1, for example, the controller 70 creates a row of the "XI" and stores the row. The pouring apparatus controller 60A then transmits a serial N2 and transfer information to the controller 70. The controller 70 stores the transfer information in the storage device 73 by associating the information with the serial N2. Figure 18(B) is a table in which the serial N2 and the transfer information are recorded by being associated with each other. When "Y2" is given as the serial N2, for example, the controller 70 creates a row of the "Y2" and stores the row.

After the step of casting is ended, the casting apparatus controller 50A transmits a product number and casting information to the controller 70. The controller 70 stores the casting information in the storage device 73 by associating the information with the product number. Figure 18(D) is a table in which the product number and the casting information are recorded by being associated with each other. When "A" is given as the product number, for example, the controller 70 creates a row of the "A" and stores the row. The product number may be given to transfer information when the controller 70 receives the transfer information. Then, the controller 70 stores the product number by associating it with the serials N1, N2, and N3, which have been received. As shown in Figure 17, the controller 70 associates the product number "A" with the serial N1 as "X1", the serial N2 as "Y2", and the serial N3 as "Z3", for example, and stores them.

Subsequently, in a step of engraving (S14 in Figure 7), the engraving apparatus controller 54A receives a product number to cause the product number to be engraved on a casting. For example, the product number "A" is engraved on a casting.

Subsequently, in a step of cooling (S16 in Figure 7), the cooler controller 56A transmits cooling information to which a serial N4 is given to the controller 70. The controller 70 stores the cooling information in the storage device 73 by associating the information with the serial N4. Figure 18(E) is a table in which the serial N4 and the cooling information are recorded by being associated with each other. When "XX1" is given as the serial N4, for example, the controller 70 creates a row of the "XX1" and stores the row. The controller 70 associates a product number with the serial N4, and stores them in the storage device 73. As shown in Figure 17, the controller 70 associates the product number "A" with the serial N4 as "XX1", for example, and stores them.

Subsequently, in a step of shaking out sand (S18 in Figure 7), the shakeout apparatus controller 57A transmits shakeout information to which a serial N5 is given to the controller 70. The controller 70 stores the shakeout information in the storage device 73 by associating the information with the serial N5. Figure 18(F) is a table in which the serial N5 and the shakeout information are recorded by being associated with each other. When "YY4" is given as the serial N5, for example, the controller 70 creates a row of the "YY4" and stores the row. The controller 70 associates a product number with the serial N5, and stores them in the storage device 73. As shown in Figure 17, the controller 70 associates the product number "A" with the serial N5 as "YY4", for example, and stores them.

Subsequently, in a step of finishing (S20 in Figure 7), the finishing apparatus controller 58A transmits finishing information to which a serial N6 is given to the controller 70. The controller 70 stores the finishing information in the storage device 73 by associating the information with the serial N6. Figure 18(G) is a table in which the serial N6 and the finishing information are recorded by being associated with each other. When "ZZ1" is given as the serial N6, for example, the controller 70 creates a row of the "ZZ1" and stores the row. The controller 70 associates a product number with the serial N6, and stores them in the storage device 73. As shown in Figure 17, the controller 70 associates the product number "A" with the serial N6 as "ZZ1", for example, and stores them.

As described above, according to the data management system 101 according to the embodiment, a product number (an example of a product identifier) and a tilting pattern of each of the upper mold 1 and the lower mold 2 in the casting apparatus 50 are acquired by the communication unit 71, and the product number and the tilting pattern are associated with each other by the CPU 72, and are then stored in the storage device 73. Accordingly, when some kind of defect occurs in a product (casting), a tilting pattern during manufacture of the product can be identified on the basis of the product number engraved on the product. The tilting pattern of each of the upper mold 1 and the lower mold 2 affects speed of pouring molten metal. While productivity is improved with increase in pouring speed, possibility of occurrence of suction of air and an oxide film increases. Thus, when some kind of defect occurs in a product, it is possible to determine whether a tilting pattern during manufacture of the product is one of causes of the defect by identifying the tilting pattern.

In addition, according to the data management system 101 according to the embodiment, a product number (an example of a product identifier) and mold temperature (an example of temperature transition) of each of the upper mold 1 and the lower mold 2 in the casting apparatus 50 during casting process are acquired by the communication unit 71, and the product number and the mold temperature are associated with each other by the CPU 72, and are then stored in the storage device 73. Accordingly, when some kind of defect occurs in a product (casting), mold temperature during manufacture of the product can be identified on the basis of the product number engraved on the product. The mold temperature of each of the upper mold 1 and lower mold 2 affects coagulation speed of a casting. The coagulation speed has an optimal value depending on a casting material and a mold shape, for example, and affects product quality. Thus, when some kind of defect occurs in a product, it is possible to determine whether mold temperature of each of the upper mold 1 and the lower mold 2 during manufacture of the product is one of causes of the defect by identifying the mold temperature.

According to the data management system 101 according to the embodiment, a product number (an example of a product identifier) and imaging data acquired by taking an image of an inner surface of the upper mold 1 or the lower mold 2 in the casting apparatus 50 are acquired by the communication unit 71, and the product number and the imaging data are associated with each other by the CPU 72, and are then stored in the storage device 73. Accordingly, when some kind of defect occurs in a product (casting), imaging data on the inner surface of one of the molds during manufacture of the product can be identified on the basis of the product number engraved on the product. In the inner surface of each of the upper mold 1 and the lower mold 2, a coating, serving for protecting a mold when manufacture is repeated, sometimes peels, and a molten metal component such as an aluminum alloy may adhere to the surface to form a film. Conditions of the film may affect product quality. Thus, when some kind of defect occurs in a product, it is possible to determine whether the inner surface of the upper mold or the lower mold during manufacture of the product is one of causes of the defect by identifying the imaging data on the inner surface.

In addition, according to the data management system 101 according to the embodiment, there is acquired the information on not only the casting apparatus 50 but also the information on the holding furnace 52, the pouring apparatus 60, the core molding apparatus 53, the cooler 56, the shakeout apparatus 57, and the finishing apparatus 58, related to manufacture of products, is acquired, and the information and the product number are associated with each other. Thus, when some kind of defect occurs in a product, it is possible to identify a cause of the defect even if the defect is affected by conditions in a plurality of steps because the cause of the defect can be considered by using entire information on a manufacturing process of the product.

In the casting apparatus 50 of the casting equipment 100 connected to the data management system 101 according to the embodiment, the upper mold 1 and the lower mold 2 are closed by a mold closing mechanism in a step of closing a mold, the closed upper mold 1 and lower mold 2 are tilted by drive means and a parallel link mechanism in a step of tilting, and the upper mold 1 and the lower mold 2, opened by the mold closing mechanism, are horizontally moved away from each other by the drive means and the parallel link mechanism in a step of removing a mold or in a step of pushing out a product. Even if a casting is formed by using the casting apparatus 50 that operates as described above, a cause of a defective product can be identified.

As described above, an embodiment of the present invention have been described, but the present invention is not limited to the above-mentioned embodiment. For example, in the above embodiment, while there is described an example in which the transfer apparatus 61 removes a core, and performs setting of the core and transfer of a casting, these operations may be performed by a conveyor or an operator. When an operator performs the operations, the operator may input completion of each of the operations into the controller 70 at timing when each of the operations of taking out a core, setting the core, and transferring a casting, is completed. The components and disposed positions of the casting equipment 100 are an example, and can be appropriately changed.

### Reference Signs List

1 ... upper mold, 2 ... lower mold, 2a ... receiving port, 5 ... upper frame, 6 ... lower frame, 7 ... main link member, 8 ... sub-link member, 10 ... tilt rotating shaft, 16 ... rotation actuator (drive means), 17 ... base frame, 21 ... mold closing mechanism, 25 ... ladle, 25a ... pouring port, 26 ... pushing out pin, 27 ... return pin, 28 ... pushing out plate, 29 ... push rod, 50 ... casting apparatus, 52 ... holding furnace, 53 ... core molding apparatus, 54 ... engraving apparatus, 55 ... conveyor, 56 ... cooler, 57 ... shakeout apparatus, 58 ... finishing apparatus, 60 ... pouring apparatus, 61 ... transfer apparatus, 70 ... controller, 100 ... casting equipment, 101 ... data management system.

## Claims

1. A data management system (101) that controls data related on a casting on a casting process, that is connected to a casting equipment (100), the casting equipment (100) including: a casting apparatus (50) configured to form the casting by using upper and lower molds (1, 2) into which molten metal is poured by using gravity, the upper and lower molds (1, 2) being able to be opened, closed, and tilted; and an engraving apparatus (54) configured to engrave a product identifier on the casting,
the casting apparatus (50) includes:
an upper frame (5) to which the upper mold (1) is attached;
a lower frame (6) to which the lower mold (2) is attached;
a mold closing mechanism (21) that is provided in the upper frame (5) to move up and down the upper mold, or that is provided in the lower frame (6) to move up and down the lower mold;
a pair of main link members (7) each of which has upper and lower ends that are rotatably coupled to the upper and lower frames (5, 6), respectively, to be oppositely arranged, and has a central portion that is provided with a rotating shaft (10);
a pair of auxiliary link members (8) that is arranged parallel to the respective main link members (7), and each of which has upper and lower ends that are rotatably coupled to the upper and lower frames (5, 6), respectively, to be oppositely arranged, and has a central portion that is provided with a rotating shaft (10); and
drive means (16) that is provided to be coupled to the rotating shaft (10) of one of the pair of main link members (7), and that tilts the upper mold (1) and the lower mold (2) or horizontally moves the molds away from each other, and
the upper frame (5), the lower frame (6), the main link member (7), and the auxiliary link member (8), constitute a parallel link mechanism,
the data management system (101) comprising:
a storage device (73) configured to store the data;
an acquisition unit configured to acquire the product identifier and a tilting pattern of each of the upper and lower molds (1, 2) in the casting apparatus (50); and
a control unit (70) configured to associate the product identifier with the tilting pattern acquired by the acquisition unit, and to cause the storage device to store the associated product identifier and tilting pattern.

2. The data management system (101) according to claim 1, wherein
the acquisition unit acquires the product identifier and temperature transition of each of the upper and lower molds (1, 2) in the casting apparatus (50) during casting process,
the control unit (70) associates the product identifier with the temperature transition acquired by the acquisition unit, and causes the storage device (73) to store the associated product identifier and temperature transition.

3. The data management system (101) according to claim 1 or 2, wherein
the acquisition unit acquires the product identifier and imaging data acquired by taking an image of an inner surface of the upper or lower mold (1, 2),
the control unit (70) associates the product identifier with the imaging data acquired by the acquisition unit, and causes the storage device (73) to store the associated product identifier and imaging data.

4. The data management system (101) according to any one of claims 1 to 3, wherein
the casting equipment (100) further includes: a holding furnace (52) that holds molten metal to be used in the casting apparatus (50); a pouring apparatus (60) that transfers the molten metal to the casting apparatus (50) from the holding furnace (52), and pours the molten metal into the casting apparatus (50); a core molding apparatus (53) that molds a core to be used in the casting apparatus (50); a cooler (56) that cools a casting formed by the casting apparatus (50); a shakeout apparatus (57) that removes core sand inside the casting cooled by the cooler (56); and a finishing apparatus (58) that applies finishing processing to the casting,
the acquisition unit further acquires molten metal information on molten metal in the holding furnace (52), transfer information on transfer of the pouring apparatus, core information on a core molded by the core molding apparatus (53), cooling information on cooling by the cooler (56), shakeout information on shakeout by the shakeout apparatus (57), and finishing information on finishing processing by the finishing apparatus (58), and
the control unit (70) associates the product identifier with the molten metal information, the transfer information, the core information, the cooling information, the shakeout information, and the finishing information, and causes the storage device (73) to store the associated information.

## Patentansprüche

1. Datenverwaltungssystem (101), das Daten im Zusammenhang mit einem Gussteil in einem Gießverfahren steuert, das mit einer Gießanlage (100) verbunden ist, wobei die Gießanlage (100) beinhaltet: eine Gießeinrichtung (50), die konfiguriert ist, um das Gussteil unter Verwendung einer oberen und einer unteren Form (1, 2) auszuformen, in die geschmolzenes Metall unter Verwendung der Schwerkraft hineingegossen wird, wobei die obere und die untere Form (1, 2) geöffnet, geschlossen und gekippt werden können; und eine Gravureinrichtung (54), die konfiguriert ist, um eine Produktkennung auf das Gussteil zu gravieren,
wobei die Gießeinrichtung (50) beinhaltet:
einen oberen Rahmen (5), an dem die obere Form (1) befestigt ist;
einen unteren Rahmen (6), an dem die untere Form (2) befestigt ist;
einen Formschließmechanismus (21), der in dem oberen Rahmen (5) bereitgestellt ist, um die obere Form auf und ab zu bewegen, oder der in dem unteren Rahmen (6) bereitgestellt ist, um die untere Form auf und ab zu bewegen;
ein Paar Hauptverbindungselemente (7), von denen jedes ein oberes und ein unteres Ende aufweist, die drehbar mit dem oberen bzw. unteren Rahmen (5, 6) gekoppelt sind, um gegenüberliegend angeordnet zu sein, und das einen zentralen Abschnitt aufweist, der mit einer rotierenden Welle (10) bereitgestellt ist;
ein Paar Hilfsverbindungselemente (8), das parallel zu den jeweiligen Hauptverbindungselementen (7) angeordnet ist und von denen jedes ein oberes und ein unteres Ende aufweist, die drehbar mit dem oberen bzw. dem unteren Rahmen (5, 6) verbunden sind, um gegenüberliegend angeordnet zu sein, und einen zentralen Abschnitt aufweist, der mit einer rotierenden Welle (10) bereitgestellt ist; und
ein Antriebsmittel (16), das bereitgestellt ist, um mit der rotierenden Welle (10) eines der beiden Hauptverbindungselemente (7) gekoppelt zu werden, und das die obere Form (1) und die untere Form (2) kippt oder die Formen horizontal voneinander weg bewegt, und
wobei der obere Rahmen (5), der untere Rahmen (6), das Hauptverbindungselement (7) und das Hilfsverbindungselement (8) einen Parallelverbindungsmechanismus bilden,
wobei das Datenverwaltungssystem (101) umfasst:
eine Speichervorrichtung (73), die zum Speichern der Daten konfiguriert ist;
eine Erfassungseinheit, die konfiguriert ist, um die Produktkennung und ein Kippmuster jeder der oberen und unteren Formen (1, 2) in der Gießeinrichtung (50) zu erfassen; und
eine Steuereinheit (70), die konfiguriert ist, um die Produktkennung mit dem von der Erfassungseinheit erfassten Kippmuster zu verknüpfen und die Speichervorrichtung zu veranlassen, die verknüpfte Produktkennung und das Kippmuster zu speichern.

2. Datenverwaltungssystem (101) nach Anspruch 1, wobei
die Erfassungseinheit die Produktkennung und den Temperaturübergang jeder der oberen und unteren Formen (1, 2) in der Gießeinrichtung (50) während des Gießverfahrens erfasst,
die Steuereinheit (70) die Produktkennung mit dem von der Erfassungseinheit erfassten Temperaturübergang verknüpft und die Speichervorrichtung (73) veranlasst, die verknüpfte Produktkennung und den Temperaturübergang zu speichern.

3. Datenverwaltungssystem (101) nach Anspruch 1 oder 2, wobei
die Erfassungseinheit die Produktkennung und Bildgebungsdaten erfasst, die durch Aufnahme eines Bildes einer inneren Oberfläche der oberen oder unteren Form (1, 2) erfasst wurden,
die Steuereinheit (70) die Produktkennung mit den von der Erfassungseinheit erfassten Bildgebungsdaten verknüpft und die Speichervorrichtung (73) veranlasst, die verknüpfte Produktkennung und Bildgebungsdaten zu speichern.

4. Datenverwaltungssystem (101) nach einem der Ansprüche 1 bis 3, wobei
die Gießanlage (100) weiter beinhaltet: einen Warmhalteofen (52), der geschmolzenes Metall zur Verwendung in der Gießeinrichtung (50) aufnimmt; eine Eingießeinrichtung (60), die das geschmolzene Metall aus dem Warmhalteofen (52) in die Gießeinrichtung (50) überführt und das geschmolzene Metall in die Gießvorrichtung (50) eingießt; eine Kernformeinrichtung (53), die einen Kern zur Verwendung in der Gießeinrichtung (50) formt; einen Kühler (56), der ein von der Gießeinrichtung (50) geformtes Gussteil kühlt; eine Ausschlageinrichtung (57), die Kernsand im Inneren des vom Kühler (56) gekühlten Gussstücks entfernt; und eine Endbearbeitungseinrichtung (58), die das Gussteil einem Endbearbeitungsverfahren unterzieht,
wobei die Erfassungseinheit weiter Metallschmelzeinformationen über geschmolzenes Metall im Warmhalteofen (52), Überführungsinformationen über Überführung der Eingießeinrichtung, Kerninformationen über einen durch die Kernformeinrichtung (53) geformten Kern, Kühlinformationen über Kühlung durch den Kühler (56), Ausschlaginformationen über Ausschlagen durch die Ausschlageinrichtung (57) und Endbearbeitungsinformationen über Endbearbeitung durch die Endbearbeitungseinrichtung (58) erfasst, und
wobei die Steuereinheit (70) die Produktkennung mit den Metallschmelzeinformationen, den Überführungsinformationen, den Kerninformationen, den Kühlinformationen, den Ausschlaginformationen und den Endbearbeitungsinformationen verknüpft und die Speichervorrichtung (73) veranlasst, die verknüpften Informationen zu speichern.

## Revendications

1. Système de gestion de données (101) qui commande des données relatives à une coulée sur un procédé de coulée, qui est connecté à un équipement de coulée (100), l'équipement de coulée (100) incluant : un appareil de coulée (50) configuré pour former la pièce coulée en utilisant des moules supérieur et inférieur (1, 2) dans lesquels du métal fondu est versé par gravité, les moules supérieur et inférieur (1, 2) étant capables d'être ouverts, fermés et inclinés; et un appareil de gravure (54) configuré pour graver un identifiant de produit sur la pièce coulée,
l'appareil de coulée (50) inclut :
un cadre supérieur (5) auquel le moule supérieur (1) est fixé ;
un cadre inférieur (6) auquel le moule inférieur (2) est fixé ;
un mécanisme de fermeture de moule (21) qui est prévu dans le cadre supérieur (5) pour monter et descendre le moule supérieur, ou qui est prévu dans le cadre inférieur (6) pour monter et descendre le moule inférieur ;
une paire d'éléments de liaison principaux (7) dont chacun a des extrémités supérieure et inférieure qui sont couplées en rotation aux cadres supérieur et inférieur (5, 6), respectivement, pour être agencées de manière opposée, et a une portion centrale qui est dotée d'un arbre rotatif (10) ;
une paire d'éléments de liaison auxiliaires (8) qui est agencée parallèlement aux éléments de liaison principaux (7) respectifs, et dont chacun a des extrémités supérieure et inférieure qui sont couplées en rotation aux cadres supérieur et inférieur (5, 6), respectivement, pour être agencées de manière opposée, et a une portion centrale qui est dotée d'un arbre rotatif (10) ; et
un moyen d'entraînement (16) qui est prévu pour être couplé à l'arbre rotatif (10) d'un de la paire d'éléments de liaison principaux (7), et qui incline le moule supérieur (1) et le moule inférieur (2) ou éloigne horizontalement les moules l'uns de l'autre, et
le cadre supérieur (5), le cadre inférieur (6), l'élément de liaison principal (7), et l'élément de liaison auxiliaire (8), constituent un mécanisme de liaison parallèle,
le système de gestion de données (101) comprenant :
un dispositif de stockage (73) configuré pour stocker les données ;
une unité d'acquisition configurée pour acquérir l'identifiant de produit et un schéma d'inclinaison de chacun des moules supérieur et inférieur (1, 2) dans l'appareil de coulée (50) ; et
une unité de commande (70) configurée pour associer l'identifiant de produit au schéma d'inclinaison acquis par l'unité d'acquisition, et pour amener le dispositif de stockage à stocker l'identifiant de produit et le schéma d'inclinaison associés.

2. Système de gestion de données (101) selon la revendication 1, dans lequel
l'unité d'acquisition acquiert l'identifiant de produit et la transition de température de chacun des moules supérieur et inférieur (1, 2) dans l'appareil de coulée (50) pendant le procédé de coulée,
l'unité de commande (70) associe l'identifiant de produit à la transition de température acquise par l'unité d'acquisition, et amène le dispositif de stockage (73) à stocker l'identifiant de produit et la transition de température associés.

3. Système de gestion de données (101) selon la revendication 1 ou 2, dans lequel
l'unité d'acquisition acquiert l'identifiant de produit et les données d'imagerie acquises par la prise d'une image d'une surface intérieure du moule supérieur ou inférieur (1, 2),
l'unité de commande (70) associe l'identifiant de produit aux données d'imagerie acquises par l'unité d'acquisition, et amène le dispositif de stockage (73) à stocker l'identifiant de produit et les données d'imagerie associés.

4. Système de gestion de données (101) selon l'une quelconque des revendications 1 à 3, dans lequel
l'équipement de coulée (100) inclut en outre : un four de maintien (52) qui maintient du métal fondu à utiliser dans l'appareil de coulée (50) ; un appareil de versement (60) qui transfère le métal fondu à l'appareil de coulée (50) depuis le four de maintien (52), et verse le métal fondu dans l'appareil de coulée (50) ; un appareil de moulage de noyau (53) qui moule un noyau à utiliser dans l'appareil de coulée (50) ; un refroidisseur (56) qui refroidit une pièce coulée formée par l'appareil de coulée (50) ; un appareil d'agitation (57) qui retire le sable de noyau à l'intérieur de la pièce coulée refroidie par le refroidisseur (56) ; et un appareil de finition (58) qui applique un traitement de finition à la pièce coulée,
l'unité d'acquisition acquiert en outre des informations de métal fondu sur le métal fondu dans le four de maintien (52), des informations de transfert sur le transfert de l'appareil de versement, des informations de noyau sur un noyau moulé par l'appareil de moulage de noyau (53), des informations de refroidissement sur le refroidissement par le refroidisseur (56), des informations d'agitation sur l'agitation par l'appareil d'agitation (57), et des informations de finition sur le traitement de finition par l'appareil de finition (58), et
l'unité de commande (70) associe l'identifiant de produit avec les informations de métal fondu, les informations de transfert, les informations de noyau, les informations de refroidissement, les informations d'agitation, et les informations de finition, et amène le dispositif de stockage (73) à stocker les informations associées.
